# EUROPEAN PATENT APPLICATION

(11) **EP 4 319 144 A1**
(43) Date of publication of application: **07.02.2024**
(21) Application number: 22779789.1
(22) Date of filing: 03.03.2022
(51) Int. Cl.: H04N 7/15, H04N 21/431, H04N 21/442, G06F 3/01

(54) **INFORMATION PROCESSING SYSTEM, INFORMATION PROCESSING METHOD, AND INFORMATION PROCESSING PROGRAM**

(30) Priority: 30.03.2021 JP 2021057215
(71) Applicant: Gree, Inc., Tokyo 106-0032 (JP)
(72) Inventor: SHIRAI, Akihiko, Tokyo 106-6112 (JP)
(74) Representative: Potter Clarkson
(86) International application number: PCT/JP2022/009184
(87) International publication number: WO 2022/209564

(57) **Abstract**

The present invention provides content distribution technology suitable for virtual spaces, and discloses an information processing system (1) comprising: a first detection part (211A) which detects the state of a first user who distributes content including images of a first virtual space (H20); a first drawing processing part (200A) which draws images of the first virtual space which can be seen by the first user via a first terminal device (20A) related to the first user; and a first storage part (240A) which stores a first display medium associated with the first user. The images of the first virtual space have a plurality of layers; the first drawing processing part is provided with a first drawing part (201A) which draws a first image region in a layer, from among the plurality of layers, which is related to the first display medium, and a second drawing part (202A) which draws a second image region in a layer, from among the plurality of layers, which is related to a first user interface; and the first drawing part varies the state of the first display medium in the first image region on the basis of the state of the first user detected by the first detection part.

## Description

### [Technical Field]

The present disclosure relates to an information processing system, an information processing method, and an information processing program.

### [Background Art]

"Mirrativ" has been known as a service for distributing music and videos to a plurality of users (see, for example, Non-Patent Document 1).

### [Prior Art Document]

### [Non-Patent Document]

Non-Patent Document 1: Mirrativ Inc., "Mirrativ", retrieved 18 December 2019, from https:/www.mirrativ.com/

### [Summary of the Invention]

### [Problems to be Solved by the Invention]

Conventional technologies such as the one mentioned above provide services that allow users to view or listen to content in real space; however, it is difficult to deploy the services into virtual space.

It is therefore an object of the present disclosure to provide technology suitable for content distribution in virtual space.

### [Means for Solving the Problems]

According to an aspect of the present disclosure, an information processing system comprises: a first detector that detects the state of a first user that distributes content including an image of a first virtual space; a first rendering processor that renders the image of the first virtual space, which the first user or a second user that views the content can view through a first terminal device related to the first user or a second terminal device related to the second user; and a first memory that stores a first display medium associated with the first user. The image of the first virtual space has a plurality of layers. The first rendering processor includes: a first rendering unit that renders a first image area of a layer related to the first display medium among the layers, and a second rendering unit that renders a second image area of a layer related to a first user interface among the layers. The first rendering unit changes the state of the first display medium in the first image area based on the state of the first user detected by the first detector.

### [Effects of the Invention]

According to the present disclosure, it is possible to obtain technology suitable for content distribution in virtual space.

### [Brief Description of the Drawings]

[FIG. 1] FIG. 1 is a block diagram of a virtual reality generation system according to an embodiment.
[FIG. 2] FIG. 2 is an explanatory diagram of images that are viewed by the left and right eyes, respectively.
[FIG. 3] FIG. 3 is a diagram for explaining the structure of an image of a virtual space according to an embodiment.
[FIG. 4] FIG. 4 is a diagram for explaining a virtual space corresponding to a home screen (lobby screen).
[FIG. 5] FIG. 5 is a diagram for explaining the layered structure of a home image.
[FIG. 5A] FIG. 5A is an enlarged view of the range of vision from the viewpoint of a user (looking at the front) in FIG. 5.
[FIG. 6] FIG. 6 is a diagram illustrating an example of a home image viewed on a wearable device.
[FIG. 7A] FIG. 7A is an explanatory diagram illustrating how front and back operation areas are switched.
[FIG. 7B] FIG. 7B is an explanatory diagram illustrating how front and back operation areas are switched.
[FIG. 8A] FIG. 8A is a schematic side view of a virtual space corresponding to a distribution image.
[FIG. 8B] FIG. 8B is a schematic top plan view of the virtual space corresponding to the distribution image.
[FIG. 9] FIG. 9 is a diagram for explaining the layered structure of a distribution image.
[FIG. 10] FIG. 10 is an explanatory diagram illustrating the relationship between a mirror and each layer of a distribution image as viewed from above.
[FIG. 11] FIG. 11 is a diagram for explaining an interface display layer related to a distribution image.
[FIG. 12] FIG. 12 is a diagram illustrating an example of a distribution image that a distributor user views through a wearable device.
[FIG. 13] FIG. 13 is a diagram illustrating an example of a distribution image that a viewer user views through a wearable device.
[FIG. 14] FIG. 14 is a diagram illustrating an example of a distribution image for smartphones.
[FIG. 15] FIG. 15 is a schematic block diagram illustrating the functions of a terminal device on the content distributor side.
[FIG. 16] FIG. 16 is an explanatory diagram illustrating an example of information for rendering an avatar.
[FIG. 17] FIG. 17 is a schematic block diagram illustrating the functions of a terminal device on the content viewer side.
[FIG. 18] FIG. 18 is a schematic block diagram illustrating the functions of a server.
[FIG. 19] FIG. 19 is a flowchart illustrating an example of operation up to the start of the distribution of specific content.
[FIG. 20] FIG. 20 is a flowchart illustrating an example of operation up to the start of viewing specific content.
[FIG. 21] FIG. 21 is a flowchart illustrating an example of operation during the distribution of specific content by a distributor user (i.e., while a viewer user is viewing the specific content).

### [Modes for Carrying Out the Invention]

In the following, exemplary embodiments will be described in greater detail with reference to accompanying drawings.

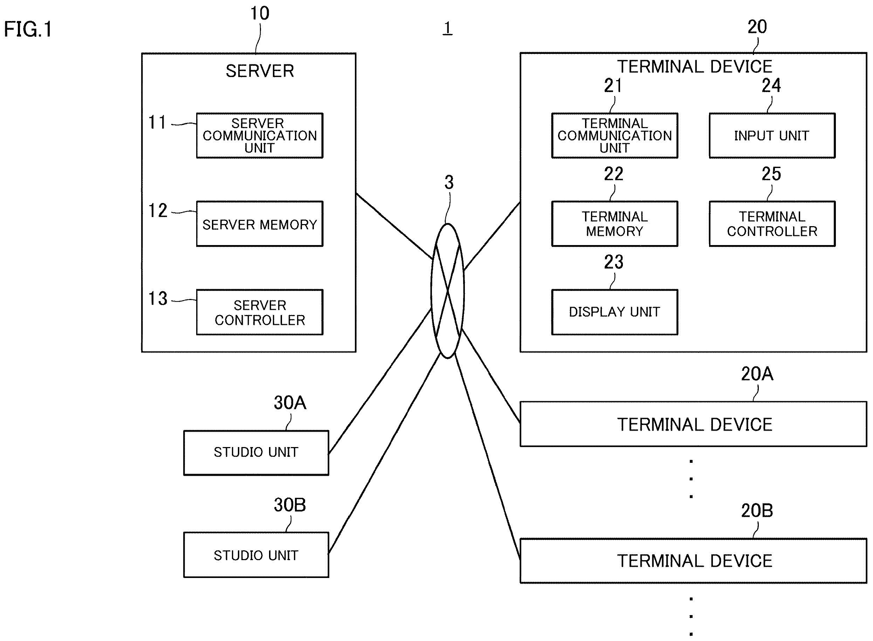

Referring to FIG. 1, a description will be given of an overview of a virtual reality generation system 1 according to an embodiment of the present invention. FIG. 1 is a block diagram of the virtual reality generation system 1 according to the embodiment.

The virtual reality generation system 1 includes a server 10 (an example of an external processing device) and one or more terminal devices 20. Although FIG. 1 illustrates three terminal devices 20 for the convenience of explanation, at least two may suffice.

The server 10 is, for example, an information processing system such as a server managed by an administrator that provides one or more virtual realities. The terminal device 20 is a device used by a user, such as a mobile phone, a smartphone, a tablet, a personal computer (PC), a wearable device (a head-mounted display, smart glasses, etc.), or a gaming machine. Typically, each user has a different type of terminal device 20, and a plurality of terminal devices may be connected to the server 10 via a network 3.

The terminal device 20 can execute a virtual reality application of this embodiment. The virtual reality application may be sent to the terminal device 20 from the server 10 or a predetermined application distribution server via the network 3. Alternatively, the virtual reality application may be stored in advance in a memory installed in the terminal device 20 or on a storage medium such as a memory card readable by the terminal device 20. The server 10 and the terminal device 20 are communicably connected to each other via the network 3. For example, the server 10 and the terminal device 20 cooperate to perform various processes related to virtual reality.

The terminal device(s) 20 includes a terminal device 20A on the content distributor side (an example of a first terminal device) and a terminal device 20B on the content viewer side (an example of a second terminal device). In the following, the terminal device 20A on the content distributor side and the terminal device 20B on the content viewer side are described as separate devices for the purpose of explanation; however, there may be cases where the terminal device 20A is on the content viewer side and vice versa. Note that the terminal device 20A and the terminal device 20B may simply be referred to as "terminal device 20" when no particular distinction is drawn between them.

The terminal devices 20 are communicably connected to one another through the server 10. Incidentally, when it is described herein that "a terminal device 20 sends information to another terminal device 20", it means that "a terminal device 20 sends information to another terminal device 20 through the server 10". Similarly, when it is described herein that "a terminal device 20 receives information from another terminal device 20", it means that "a terminal device 20 receives information from another terminal device 20 through the server 10". Nevertheless, there may be a modification in which the terminal devices 20 are communicably connected to one another without the server 10.

The network 3 may include a wireless communication network, the Internet, a virtual private network (VPN), a wide area network (WAN), a wired network, or any combination of these.

In the example of FIG. 1, the virtual reality generation system 1 includes studio units 30A and 30B. As with the terminal device 20A on the content distributor side, the studio units 30A and 30B are devices on the content distributor side. The studio units 30A and 30B may be located in a studio, a room, a hall, or the like for content production.

The studio units 30 may each have the same functions as the terminal device 20A on the content distributor side and/or the server 10. In order to simplify the explanation, the following description is mainly focused on a case where the terminal device 20A on the content distributor side distributes various types of contents to the terminal device 20B on the content viewer side through the server 10. Alternatively or additionally, however, there may be a case where the studio units 30A and 30B corresponding to distributor users have the same functions as the terminal device 20A on the content distributor side and distribute various contents to the terminal device 20B on the content viewer side through the server 10. In a modification, the virtual reality generation system 1 may not include the studio units 30A and 30B.

Although the virtual reality generation system 1 will be described herein as implementing an example of an information processing system, each element of a specific terminal device 20 (terminal communication unit 21 to terminal controller 25, see FIG. 1) may implement the information processing system exemplified, or a plurality of terminal devices 20 may cooperate to implement the information processing system exemplified. In addition, the server 10, either alone or in cooperation with one or more terminal devices 20, may implement the information processing system exemplified.

Described below is an overview of virtual reality according to the embodiment. In the embodiment, virtual reality refers to a virtual version of any real-world experience such as, for example, education, travel, roleplaying, simulation, entertainment including games and concerts, and the like. The implementation of virtual reality involves the use of virtual reality media such as avatars. For example, virtual reality of this embodiment is realized by a three-dimensional virtual space, various virtual reality media that appear in the virtual space, and various contents provided in the virtual space.

The virtual reality media are electronic data used in virtual reality, including, for example, cards, items, points, in-service currency (or currency in virtual reality), tickets, characters, avatars, parameters, and any other media. The virtual reality media may also be virtual realityrelated information such as level information, status information, parameter information (hit points, health points, etc.), and ability information (skills, abilities, spells, jobs, etc.). While the term "virtual reality media/medium" as used herein refers to electronic data that a user can acquire, own, use, manage, exchange, combine, enhance, sell, dispose of, or gift in virtual reality, the usage of virtual reality media is not limited to those specified or described herein.

In this embodiment, users include a viewer user (an example of a second user) that views various contents in a virtual space and a distributor user (an example of a first user) that distributes specific content described below in the virtual space through a distributor avatar M2 (an example of a first display medium) described below.

The distributor user may view specific content distributed by another distributor user as a viewer user, and also the viewer user may distribute specific content as a distributor user. However, for avoiding complications in the description, herein it is assumed that the viewer user is a user who is a viewer at that time, and the distributor user is a user who is a distributor at that time. Note that the distributor user and the viewer user may simply be referred to as "user" when there is no particular distinction between them. In addition, a viewer avatar M1 (an example of a second display medium) related to the viewer user and the distributor avatar M2 may simply be referred to as "avatar" when there is no particular distinction between them.

Incidentally, an avatar is typically in the form of a character having a front side and may be in the figure of a person, an animal, or the like. An avatar can be associated with various avatar items to vary its visual appearance (appearance when rendered).

The viewer user and the distributor user basically wear a wearable device on, for example, their head or part of their face, and they view a virtual space through the wearable device. The wearable device may be a head-mounted display or a glass device. The glass device may be augmented reality (AR) glasses or mixed reality (MR) glasses. In either case, the wearable device may be separate from the terminal device 20 or may implement some or all of the functions of the terminal device 20. In this embodiment, as an example, a head-mounted display is used as the terminal device 20.

Among various types of contents distributed by the server 10, specific content of a distributor user (distributor user-created specific content) will be mainly described. The following description also provides content that is suitable for viewing through a head-mounted display.

The term "distributor user-created specific content" as used herein refers to content where the distributor avatar M2 related to a distributor user appears in a virtual space and changes its orientation, position, movement, and the like according to the orientation, position, movement, and the like of the distributor user. As to the definition of the orientation, position, and movement of the distributor user, its concept includes not only the orientation, position, and movement of part or all of the distributor user's body such as their face and hands, but also the direction, position, and movement of their gaze or the like. Distributor user-created specific content is typically video content.

In general, distributor user-created specific content provides entertainment in an arbitrary manner through the distributor avatar M2. For example, distributor user-created specific content may be related to chats, meetings, gatherings, conferences, or the like, as well as various types of performances such as dance, music, and magic.

Distributor user-created specific content may also be educational. For example, distributor user-created specific content may include guidance, advice, or the like provided by a distributor user through the distributor avatar M2. As a specific example, distributor user-created specific content may be the one provided in virtual reality related to a dance lesson, which includes guidance, advice, or the like from a dance teacher. In this case, the dance teacher may be the distributor user, while their student may be a viewer user, and the student can take a private lesson from the teacher in virtual reality.

In addition, distributor user-created specific content may be a collaboration of two or more distributor users. This enables distribution in a variety of forms and promotes interaction among distributor users.

The server 10 may distribute content other than distributor user-created specific content. There may be any type or number of contents provided by the server 10 (contents available in virtual reality). In this embodiment, content provided by the server 10 may include, as an example, digital content such as various videos. Those videos may be real-time or non-real-time videos. The videos may also be composed of real images or computer graphics (CG). In addition, the videos may be for informational purposes. In this case, the videos may be related to services for providing information in a specific category (travel, housing, food, fashion, health, beauty, etc.), broadcast services provided by specific users such as, for example, YouTube (registered trademark), and the like.

There are various forms of content provision in virtual reality, and content may be provided in a manner other than using the display function of a head-mounted display. For example, in the case of video content, the content may be provided by drawing or rendering a video on the display of a display device (virtual reality medium) in a virtual space. The display device in the virtual space can be in any form, and it may be a screen set in the virtual space, a large screen display set in the virtual space, the display of a mobile terminal in the virtual space, or the like.

Content in virtual reality may be viewable by means other than through a head-mounted display. For example, content in virtual reality may be viewed directly on a smartphone, tablet, or the like (without using a head-mounted display).

### (Configuration of Server)

A specific configuration of the server 10 will be described. The server 10 comprises a server computer. A plurality of server computers may cooperate in implementing the server 10. For example, the server 10 may be implemented through cooperation among a server computer that provides various contents, a server computer that implements various authentication servers, and the like. The server 10 may include a web server. In this case, a browser may implement part of the functions of the terminal device 20 (described later) by processing HTML documents received from the web server and various programs (Javascript) in the HTML documents.

As illustrated in FIG. 1, the server 10 includes a server communication unit 11, a server memory 12, and a server controller 13.

The server communication unit 11 includes an interface that communicates with external devices through a wireless or wired connection to send and receive information. The server communication unit 11 may further include, for example, a wireless or wired local area network (LAN) communication module. The server communication unit 11 can send and receive information to and from the terminal device 20 via the network 3.

The server memory 12 is, for example, a storage device, and stores various types of information and programs required for various processes related to virtual reality.

The server controller 13 may include a dedicated microprocessor or a central processing unit (CPU) that loads a specific program and implements a specific function. The server controller 13 may also include a graphics processing unit (GPU) or the like. For example, the server controller 13 cooperates with the terminal device 20 to execute a virtual reality application in response to a user operation on a display unit 23 of the terminal device 20.

### (Configuration of Terminal Device)

A configuration of the terminal device 20 will be described. As illustrated in FIG. 1, the terminal device 20 includes a terminal communication unit 21, a terminal memory 22, a display unit 23, an input unit 24, and a terminal controller 25.

The terminal communication unit 21 includes an interface that communicates with external devices through a wireless or wired connection to send and receive information. The terminal communication unit 21 may further include, for example, a wireless communication module that supports a mobile communication standard such as long-term evolution (LTE) (registered trademark), LTE-Advanced (LTE-A), 5th generation mobile communication system, and ultra mobile broadband (UMB), a wireless or wired LAN communication module, or the like. The terminal communication unit 21 can send and receive information to and from the server 10 via the network 3.

The terminal memory 22 includes, for example, a primary memory and a secondary memory. For example, the terminal memory 22 may include a semiconductor memory, a magnetic memory, an optical memory, or the like. The terminal memory 22 stores various types of information and programs used for processes related to virtual reality, which have been received from the server 10. The information and programs used for processes related to virtual reality may be acquired from an external device via the terminal communication unit 21. For example, a virtual reality application program may be acquired from a predetermined application distribution server. Hereinafter, an application program will sometimes be simply referred to as "application".

The terminal memory 22 also stores data for rendering a virtual space including, for example, an image of an indoor space such as a building, an image of an outdoor space, and the like. A plurality of types of data may be prepared for rendering virtual spaces and used separately for each of the virtual spaces.

The terminal memory 22 also stores various images (texture images) for projection (texture mapping) onto various objects arranged in a three-dimensional virtual space.

For example, the terminal memory 22 stores rendering information for the viewer avatar M1 as a virtual reality medium associated with each user. The viewer avatar M1 is rendered in a virtual space based on the rendering information for the viewer avatar M1.

Similarly, the terminal memory 22 stores rendering information for the distributor avatar M2 as a virtual reality medium associated with each distributor user. The distributor avatar M2 is rendered in a virtual space based on the rendering information for the distributor avatar M2.

In addition, the terminal memory 22 stores rendering information related to a variety of objects other than the viewer avatar M1 and the distributor avatar M2, such as various gift objects, buildings, walls, non-player characters (NPCs), and the like. Those objects are rendered in a virtual space based on the rendering information. Incidentally, the term "gift object" as used herein refers to an object corresponding to a gift from one user to another user, and a gift object is an item. Examples of gift objects include items for an avatar to wear (clothes, accessories, etc.), items for decorating a distribution image (fireworks, flowers, etc.), backgrounds (wallpapers) or the like, and tickets that can be used to play a gacha (lottery) game or the like.

The display unit 23 includes a display device such as a liquid crystal display or an organic electroluminescence (EL) display. The display unit 23 can display a variety of images. The display unit 23 comprises, for example, a touch panel, and functions as an interface that detects various user operations. The display unit 23 may be built in a head-mounted display as described above.

The input unit 24 may include physical keys. The input unit 24 may further include any input interface including a pointing device such as a mouse. The input unit 24 may be capable of receiving non-contact user inputs such as voice inputs, gesture inputs, and gaze inputs. A gesture input may be recognized using a sensor (image sensor, acceleration sensor, distance sensor, etc.) that detects various user states, a dedicated motion capture system that integrates a camera with sensor technology, a controller such as a joypad, or the like. A camera for tracking a user's gaze may be installed in a head-mounted display. Examples of various user states include the orientation, position, movement, and the like of a user. As described above, the concept of the phrase "the orientation, position, and movement of a user" includes not only the orientation, position, and movement of the user's body or hands, but also the direction, position, and movement of the user's gaze or the like.

The terminal controller 25 includes one or more processors. The terminal controller 25 controls the overall operation of the terminal device 20.

The terminal controller 25 sends and receives information via the terminal communication unit 21. For example, the terminal controller 25 receives various types of information and programs used for various processes related to virtual reality from at least either the server 10 or another external server. The terminal controller 25 stores the received information and programs in the terminal memory 22. The terminal memory 22 may also store, for example, a browser (Internet browser) for a connection to a web server.

The terminal controller 25 starts a virtual reality application in response to a user operation. The terminal controller 25 performs various processes related to virtual reality in cooperation with the server 10. For example, the terminal controller 25 causes the display unit 23 to display an image of a virtual space. The display unit 23 may also display, for example, a graphical user interface (GUI) that detects user operations on the screen. The terminal controller 25 can detect a user operation through the input unit 24. The terminal controller 25 can detect various operations or gestures (e.g., tap, long tap, flick, swipe, etc.) by a user. The terminal controller 25 sends information on such operations to the server 10.

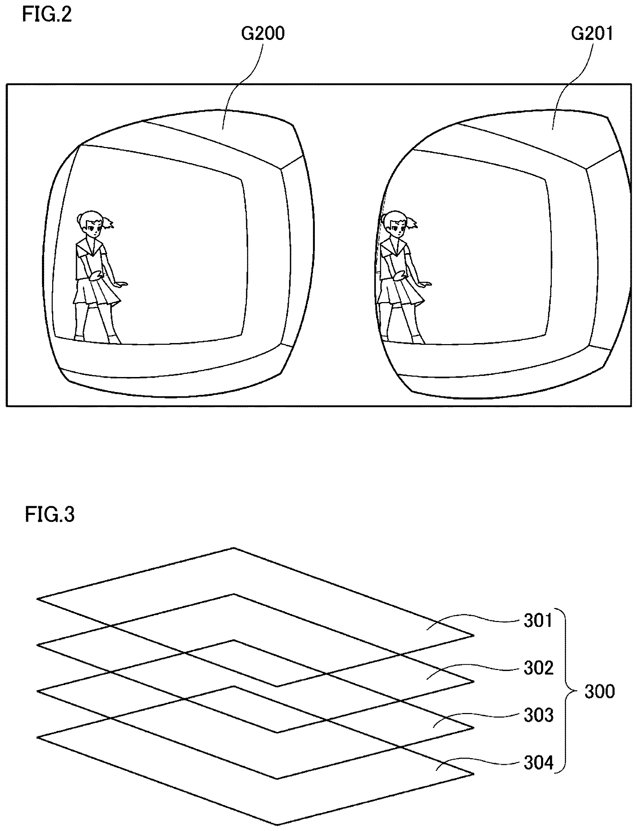

The terminal controller 25 renders the distributor avatar M2 and the like together with the virtual space (image) and causes the display unit 23 to display them. Referring to FIG. 2, there are schematically illustrated images G200 and G201 that are viewed by the left and right eyes, respectively. For example, the terminal controller 25 may create the images G200 and G201 to be viewed by the left and right eyes as illustrated in FIG. 2 to provide a stereoscopic image. In the following, the term "virtual space image" (or "an image of a virtual space") will refer to a whole image represented by the images G200 and G201 unless otherwise specified. In addition, the terminal controller 25 realizes various movements of the distributor avatar M2 in the virtual space, for example, according to various operations provided by the distributor user.

FIG. 3 is a diagram for explaining the structure of an image of a virtual space according to the embodiment.

In this embodiment, a virtual space image has a layered structure 300 formed of a plurality of layers as conceptually illustrated in FIG. 3. The terminal controller 25 renders the image areas of the individual layers and overlays the image areas to create an image of a virtual space. Note that although FIG. 3 illustrates the layered structure 300 having four layers 301 to 304 as an example, there may be any number of layers.

The plurality of layers may include any combination of two or more of the following layers: a distributor avatar display layer J0 for displaying the distributor avatar M2, a user avatar display layer J1 for displaying the viewer avatar M1, an interface display layer J2 for displaying a user interface, a background layer J3, and an auxiliary information display layer J5 for displaying various types of auxiliary information or a similar layer.

In the following, the front and back (or behind) relationship of those layers is based on the viewpoint of a user who views the virtual space image. Similarly, the relationship of the distance between the individual layers is based on the distance along the direction of the gaze of a user who views the virtual space image.

When the layers include the background layer J3, the background layer J3 is the backmost layer. Meanwhile, the front-back order of the other layers may be determined as appropriate. For example, if a plurality of layers related to an image of a certain virtual space includes the distributor avatar display layer J0, the interface display layer J2, the background layer J3, and the auxiliary information display layer J5, the display layers may be arranged in the following order: layer J0, layer J2, layer J5, and layer J3, from the front side.

The interface display layer J2 is a layer related to the input unit 24 described above and enables the input unit 24 to receive a non-contact input from a user. The interface display layer J2 is preferably located within the user's reach (i.e., at an operable distance) in the virtual space. This allows the user wearing a head-mounted display to provide various inputs through the interface display layer J2 in a manner in which motion sickness is unlikely to occur without moving around in the virtual space.

The auxiliary information display layer J5 is preferably arranged behind the interface display layer J2. In this case, the auxiliary information display layer J5 is located outside of the user's reach (out of reach without moving) in the virtual space. As a result, the visibility of the interface display layer J2 can be improved compared to the case where the auxiliary information display layer J5 is arranged in front of the interface display layer J2.

The auxiliary information display layer J5 may display any auxiliary information. For example, the auxiliary information may include at least one of the following: input information from a viewer user of specific content (i.e., a viewer/user who is viewing the specific content), guidance/notification information for a distributor user and/or other users, and information on items including a gift object to be presented to the distributor user.

The auxiliary information display layer J5 may include a plurality of layers in which a different layer is formed for each attribute of auxiliary information. For example, an auxiliary information display layer J5 where a gift object is rendered may be formed separately from another auxiliary information display layer J5. In this case, the auxiliary information display layer J5 where a gift object is rendered may be arranged behind the distributor avatar display layer J0 and closer thereto than the other auxiliary information display layer J5. Alternatively, the auxiliary information display layer J5 where a gift object is rendered may be arranged in front of the distributor avatar display layer J0, unlike the other auxiliary information display layer J5.

The background layer J3 may have the function of defining the outer boundary (outer contour) of the virtual space. Incidentally, the virtual space may be an infinite space with virtually no background to be represented by the background layer J3, or it may be a cylindrical or spherical space.

### (Example of Virtual Reality)

In cooperation with the terminal device 20, the server controller 13 displays an image of a virtual space on the display unit 23 and updates the image along with the progress of virtual reality and according to user operations.

While a rendering process is described below as being implemented by the terminal device 20, there may be embodiments in which part or all of the rendering process is implemented by the server controller 13. For example, in the following description, at least part of a virtual space image displayed on the terminal device 20 may be displayed in a webview on the terminal device 20 based on data generated by the server 10. In addition, at least part of the screen may be used to display a native view with a native application installed in the terminal device 20.

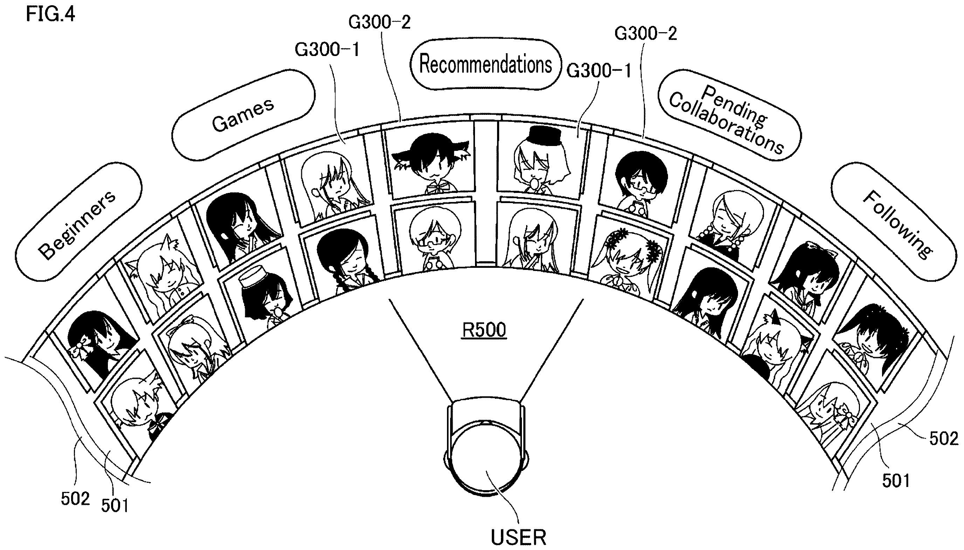

Next, some examples of virtual space images created by the virtual reality generation system 1 will be described with reference to FIGS. 4 to 14.

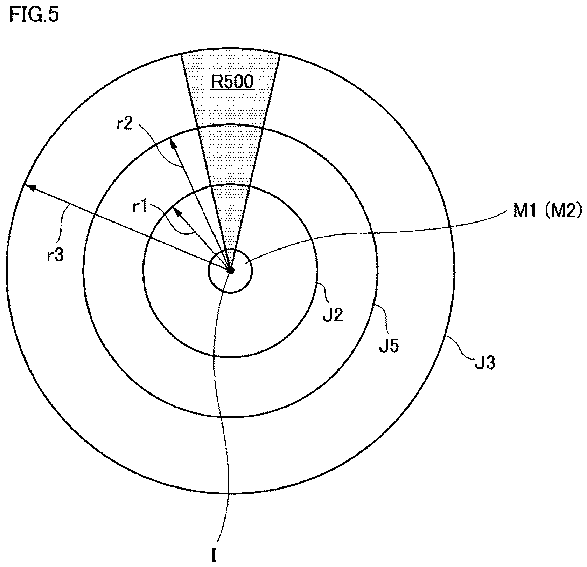

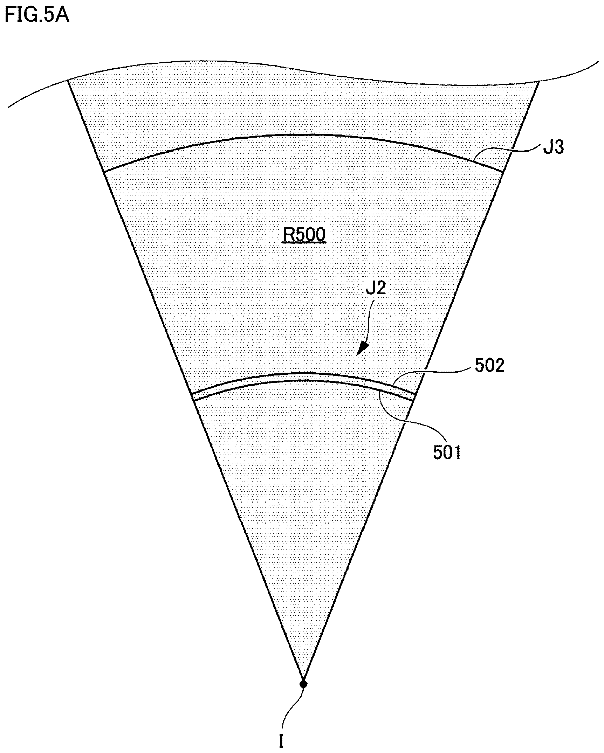

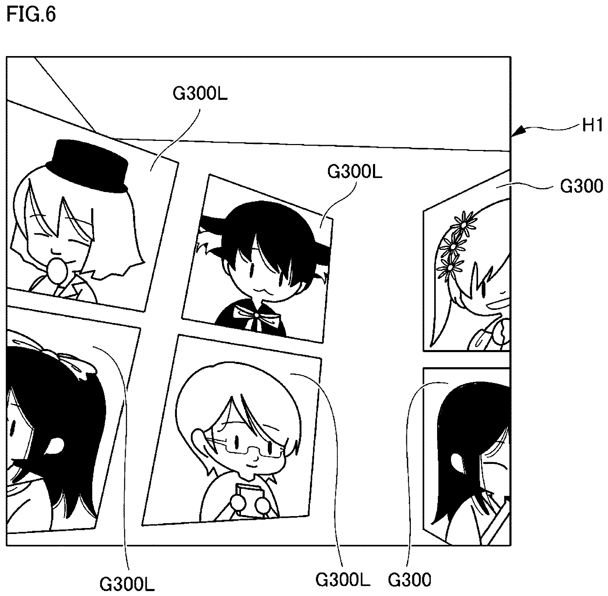

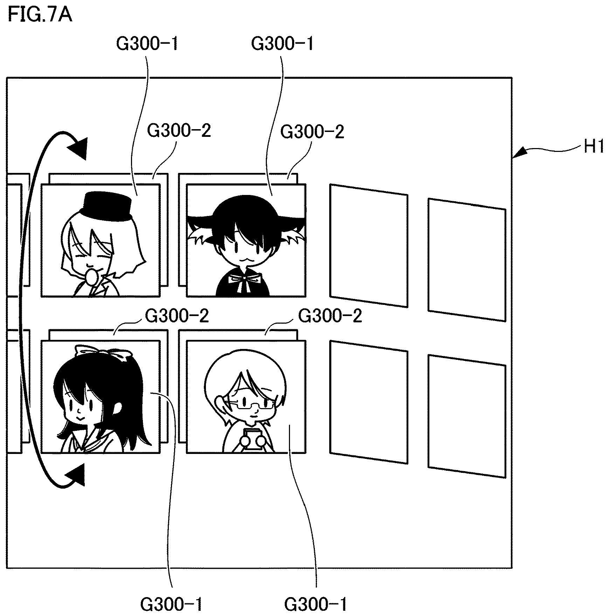

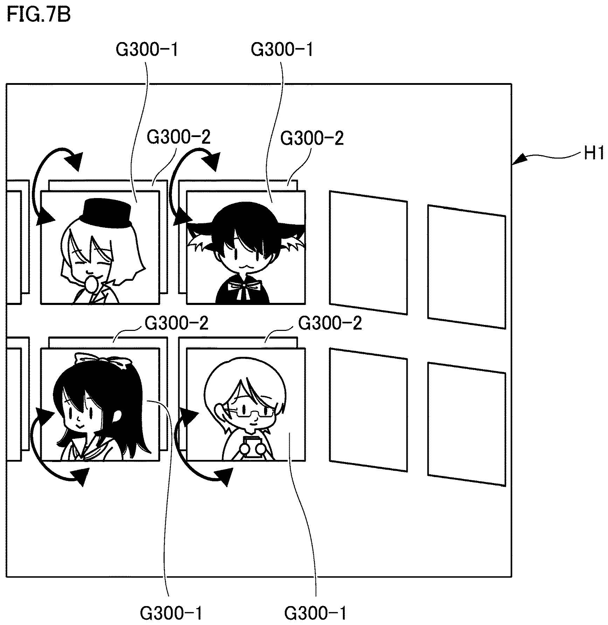

FIG. 4 is a diagram for explaining a virtual space corresponding to a home screen (lobby screen). FIG. 5 is a diagram for explaining the layered structure of an image of the home screen (hereinafter referred to as "home image H1") . FIG. 5A is an enlarged view of a view range R500 from the viewpoint of a user (looking at the front) in FIG. 4. FIG. 6 is a diagram illustrating an example of the home image H1 viewed on a head-mounted display. FIGS. 7A and 7B are explanatory diagrams illustrating how front and back operation areas are switched.

The home image H1 represents a virtual space that serves as an entrance to enter into various virtual spaces (hereinafter referred to as "home space"). FIG. 4 schematically illustrates a user who is present in the home space. As will be described later, operation areas G300 for selecting various contents are arranged in the home space. In the home space, the user can perform various activities such as viewing specific content of a desired distributor user, distributing specific content as a distributor user, and distributing specific content in collaboration with another user (hereinafter sometimes referred to as "collaborative distribution").

In this embodiment, the home image H1 includes, for example, the interface display layer J2 (an example of a layer related to a second user interface), the auxiliary information display layer J5, and the background layer J3, which are arranged in this order from the front side. In a modification, the home image H1 may include other layers such as those mentioned previously, or it may not include some of the above layers (e.g., the auxiliary information display layer J5 and/or the background layer J3).

FIG. 5 illustrates an example of the layout of the interface display layer J2, the auxiliary information display layer J5, and the background layer J3 as viewed from above, along with a predetermined reference axis I that passes through the position of the user (the position of the viewer avatar M1 or the distributor avatar M2). As used herein "viewed from above" or "top view" refers to a top view from above relative to the vertical direction of a virtual space unless otherwise specified.

As illustrated in FIG. 5, in this embodiment, the interface display layer J2, the auxiliary information display layer J5, and the background layer J3 are arranged such that they form the surfaces of cylinders with different diameters r1, r2, and r3 around the predetermined reference axis I as viewed from above. The diameters r1, r2, and r3 each correspond to the distance between a corresponding one of the layers and the user. The diameter r3 related to the background layer J3 may be infinite (infinity). The diameter r1 of the interface display layer J2 may be set within the user's reach, as described above. In addition, the diameter r1 may be adjustable for each user. With this, the interface display layer J2 can be formed at a distance appropriate to the length of the user's hand and preference.

The interface display layer J2 is preferably arranged with reference to the location of the user in the home space. In other words, having entered the home space, the user is positioned in a predetermined positional relationship with the interface display layer J2. In this embodiment, with reference to the location of the user in the home space, the interface display layer J2 is arranged within a range reachable by the user at that location. As a result, while wearing a head-mounted display, the user can provide various inputs through the interface display layer J2 in a manner in which motion sickness is unlikely to occur without moving around in a virtual space.

The interface display layer J2 preferably includes a plurality of planar operation areas G300 that function as the input unit 24. In this case, the planar operation areas G300 may serve as selection buttons that can be selected by the user. The planar operation areas G300 may have any size and shape, and their size and shape may vary depending on their attributes. This makes it easier for the user to identify the operation areas G300 with their respective attributes.

Operating the operation areas G300 may implement various processes of any type (an example of a variety of second processes). For example, the various processes may include: a process of changing the arrangement of the user interface (e.g., the planar operation areas G300), a process of moving a user to an arbitrary or specific location in a virtual space (e.g., moving a distributor user to a place for distribution), a process to start distributing various contents, a process to start viewing various contents, a process to end viewing of various contents, an audio input process, a process of giving a gift to a distributor user, a process of drawing lots for avatar items, a process of selecting/replacing an avatar item, a text input process, and a process of transitioning to a state where any of these processes can be performed, or any combination of these. Thereby, the user can perform a variety of operations through the interface display layer J2.

The planar operation areas G300 that correspond to the process to start viewing content may be rendered in such a manner that they are associated with options for content to be selected. For example, a thumbnail or real-time video image of each content option for selection (e.g., distributor user-created specific content) may be drawn in each of the operation areas G300 (see FIG. 4). In addition, the thumbnail of content for collaborative distribution may have an image of distributor avatars M2 of a plurality of distributor users that perform the collaborative distribution. This allows the user to easily understand what content is available for viewing, and thus the user can easily select a desired one of the operation areas G300 (e.g., one of the operation areas G300 related to desired specific content).

The planar operation areas G300 are preferably arranged in a plurality of rows as illustrated in FIG. 4. With this, when the number of the planar operation areas G300 increases due to, for example, an increase in the number of distributor users (and an accompanying increase in the number of specific contents being distributed), a number of operation areas can be arranged efficiently within a range viewable by the user.

In this case, at least some of the planar operation areas G300 are arranged in a plurality of rows along a first curved surface 501 (see FIGS. 4 and 5A) centered on the predetermined reference axis I. The predetermined reference axis I is an axis that passes through the position of the user and extends vertically in the home space. In a top view of the home space, the first curved surface 501 may be in a circular form that shapes the interface display layer J2, and the center of curvature may be located on the predetermined reference axis I. In a modification, however, the first curved surface 501 may have an oval or similar shape in a top view of the home space. This allows the user to view the planar operation areas G300 at an equal distance from themself or the center, which improves operability. Note that when the planar operation areas G300 are arranged along the first curved surface 501, the direction of the plane corresponding to the planar shape of the operation areas G300 may be parallel to the direction of the tangent to the first curved surface 501 in a top view of the home space. Alternatively, if the radius of curvature of the first curved surface 501 is sufficiently small, the operation areas G300 may be projected onto the first curved surface 501.

The planar operation areas G300 may also preferably be arranged in such a manner that they are grouped by category. For example, among the operation areas G300, those belonging to the category "Recommendations" for the user may be located in the front or center part of the first curved surface 501 as viewed from the user's viewpoint, while those belonging to other categories (e.g., "Pending Collaborations", "Games", "Beginners", "Following", etc.) may be located on the left and right sides of the front part. The arrangement of the operation areas G300 may be customized for each user in the same manner as the arrangement of various application icons on the smartphone screen. FIG. 4 schematically illustrates a range in the front or center as viewed from the user's viewpoint as a front range R500 (see FIG. 5). The home image H1 is created based on the front range as viewed from the user's viewpoint. The position of the front range R500 from the user's viewpoint may change as the direction of the user's gaze or the orientation of the user's face changes. This enhances the consistency between changes in the field of view in real space and changes in the field of view in virtual space.

The planar operation areas G300 are preferably arranged in a plurality of layers in the front-back direction. For example, the planar operation areas G300 may include a first group arranged in a plurality of rows along the first curved surface 501 centered on the predetermined reference axis I and a second group arranged in a plurality of rows along a second curved surface 502 centered on the predetermined reference axis I. As illustrated in FIG. 4, the second curved surface 502 may be offset to be located behind the first curved surface 501. In this case, the second group including the operation areas G300 arranged along the second curved surface 502 (hereinafter also referred to as "operation areas G300-2" to distinguish it from the first group) is overlaid behind the first group including the operation areas G300 arranged along the first curved surface 501 (hereinafter also referred to as "operation areas G300-1" to distinguish it from the second group), as viewed from the user's viewpoint. The user may be able to partially view the second group of operation areas G300-2 behind the first group of operation areas G300-1. With this, it is possible to make the user aware of operation areas present on the backside and efficiently increase the number of operation areas that may catch the user's attention. There may also be a third curved surface that is located behind the second curved surface so that further planar operation areas G300 can be arranged. In this manner, the planar operation areas G300 may be arranged to be overlaid in two or more layers as viewed from the user's viewpoint.

When the planar operation areas G300 are overlaid in the front-back direction, a number of them can be arranged to be operable by the user, and also the processing load related to rendering can be efficiently reduced. For example, the processing load related to rendering can be reduced as a whole by performing a complete rendering of thumbnail or real-time video images only for the operation areas G300-1 and an incomplete rendering (e.g., rendering with a different texture, etc.) for the operation areas G300-2. The processing load related to rendering can also be reduced as a whole by performing, from a similar perspective, a complete rendering of thumbnail or real-time video images only for those in the front range R500 among the operation areas G300-1 as viewed from the user's viewpoint and an incomplete rendering (e.g., rendering with a different texture, etc.) for those outside the front range R500. For example, by pre-caching or preloading, on the user's terminal device 20, data that is likely to be used for the operation areas G300-1 within the front range R500, it is possible to efficiently reduce the number of requests submitted via the network 3, the amount of requests imposed on the network 3 accordingly, and the computational resources used to respond to the requests, as well as to reduce the latency. In this case, the data that is likely to be used for the operation areas G300-1 within the front range R500 may be predicted based on trends for each user or determined by artificial intelligence-based machine learning.

FIG. 5A schematically illustrates the relationship between the first curved surface 501 and the second curved surface 502 as viewed from above. The offset distance between the first curved surface 501 and the second curved surface 502 may be significantly smaller than the distance between layers with different attributes (e.g., the distance between the interface display layer J2 and the auxiliary information display layer J5). This makes it easier for the user to see that these surfaces are on the same interface display layer J2 and intuitively understand that the planar operation areas G300 are also present on the back or far side.

When a plurality of planar operation areas G300 are arranged in the interface display layer J2 as described above, the user may be able to change the arrangement of the user interface (e.g., the planar operation areas G300) by a specific operation. This allows the user to arrange the user interface (e.g., the planar operation areas G300) according to their preferences and tastes.

For example, part of the planar operation areas G300 may function as buttons for changing their arrangement. Alternatively, the user may be able to move the planar operation areas G300 left and right as viewed from the user's viewpoint through a gesture input by moving their hand left and right. FIG. 6 illustrates a state where the left operation areas G300 (denoted by "G300L" in FIG. 6) are being moved to the front or center as viewed from the user's viewpoint according to a user operation. In this manner, the planar operation areas G300 may be moved left or right along the first curved surface 501. This allows the user to easily change those among the planar operation areas G300 which are located in the front or center as viewed from the user's viewpoint. In this case, the planar operation areas G300 may be moved such that those located in the front range change collectively for each category. This makes it possible to maintain the operation areas G300 gathered or organized for each category, thus achieving both visibility and operability.

Part or all of the planar operation areas G300 may be continuously, regularly, or irregularly moved left or right along the first curved surface 501 (and/or the second curved surface 502) or in a circular fashion. The movement may be changeable as needed based on user settings or may be implemented based on an event where a predetermined movement condition is satisfied.

In addition, when the planar operation areas G300 are overlaid in the front-back direction as described above, the user may be able to switch between the front and back operation areas by providing a predetermined input. Assuming, for example, the above-mentioned case where the second group including the operation areas G300-2 arranged along the second curved surface 502 is overlaid behind the first group including the operation areas G300-1 arranged along the first curved surface 501 as viewed from the user's viewpoint, the user may be able to switch between the first group and the second group through a predetermined input by moving their hand in a predetermined manner as schematically illustrated in FIG. 7A. This enables intuitive operation and thereby improves operability. After the switching, the operation areas G300-2 in the second group, which have been arranged along the second curved surface 502, are arranged along the first curved surface 501 as the first group, while the operation areas G300-1 in the first group, which have been arranged along the first curved surface 501, are arranged along the second curved surface 502 as the second group. Such a front-back switching operation may be applied only to those among the planar operation areas G300 which are located in the front or center as viewed from the user's viewpoint. This reduces the processing load compared to replacing all the planar operation areas G300.

The front-back switching may be performed such that the operation areas G300-1 in the first group arranged along the first curved surface 501 are moved as they are to the back all together as schematically indicated by arrows in FIG. 7A. The front-back switching may also be performed such that, of the operation areas G300-1 in the first group arranged along the first curved surface 501, the upper ones are moved back from the top, while the lower ones are moved back from the bottom, as schematically indicated by arrows in FIG. 7B. Conversely, switching between the first group and the second group may be performed such that, of the operation areas G300-2 in the second group arranged along the second curved surface 502, the upper ones are moved to the front from the top, while the lower ones are moved to the front from the bottom, as schematically indicated by arrows in FIG. 7B. Although an example has been described in which there are two groups of operation areas, the same applies to the case of three or more groups (i.e., when the planar operation areas G300 are overlaid in three or more layers in the front-back direction).

Incidentally, the home image H1 of this embodiment does not include the user avatar display layer J1; however, it is not so limited. For example, the home image H1 may include the user avatar display layer J1 on the front side (a side closer to the user's viewpoint) than the interface display layer J2. In this case, a hand may be drawn on the user avatar display layer J1 of the home image H1 when, for example, the user puts their hand forward. With this, the user can operate the planar operation areas G300 while watching the movement of the hand, which improves operability.

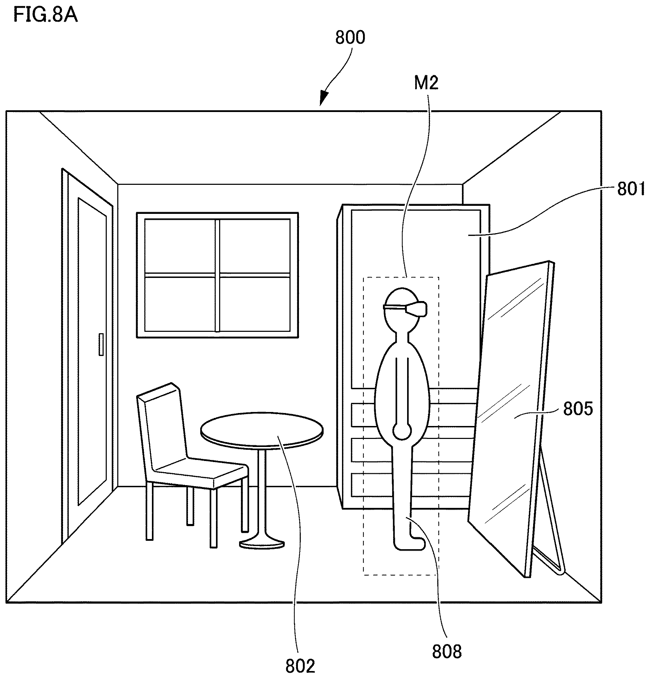

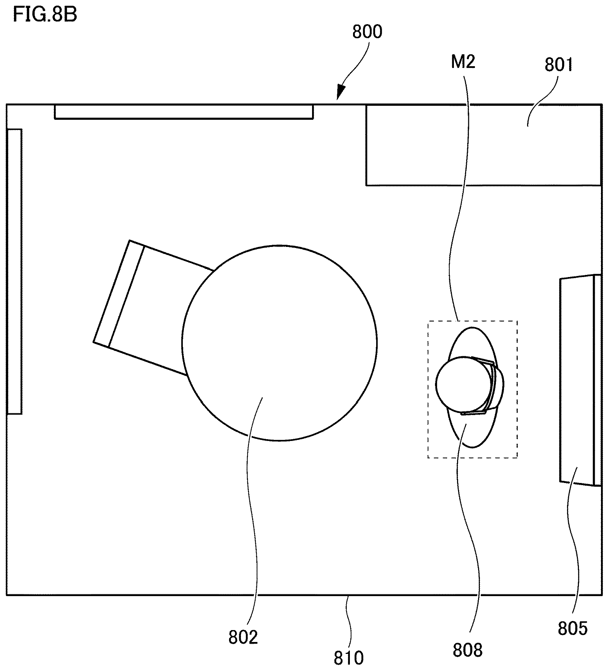

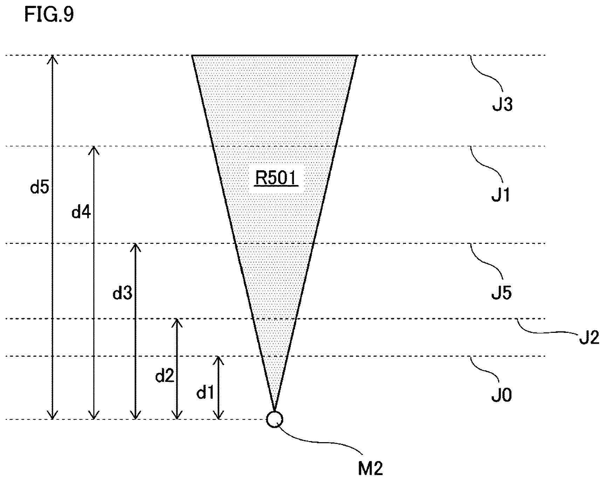

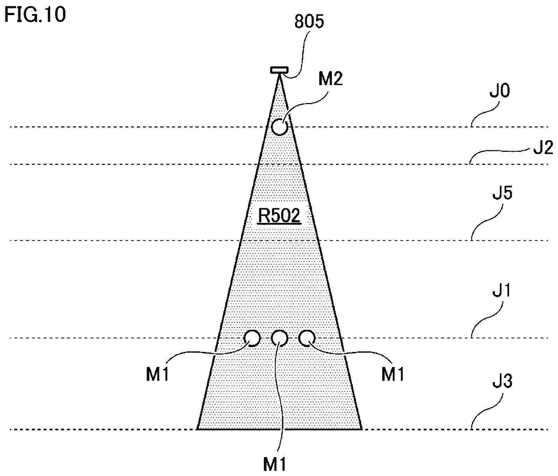

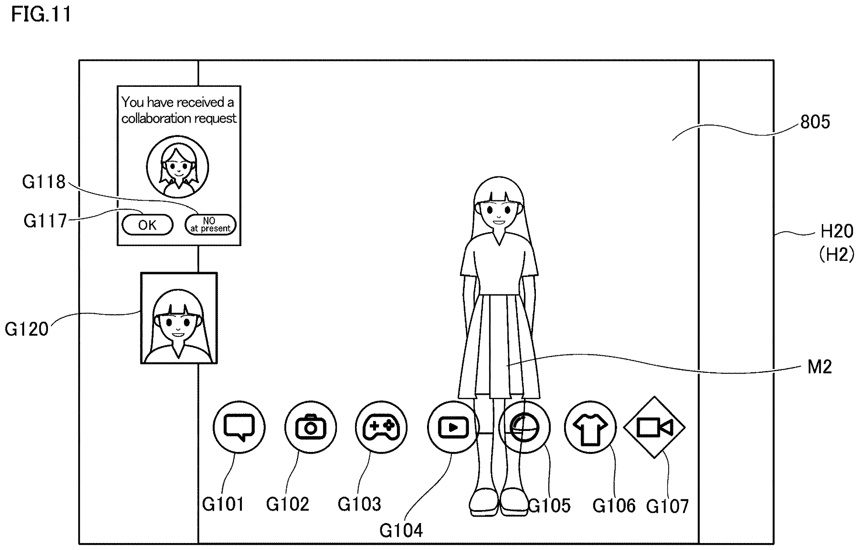

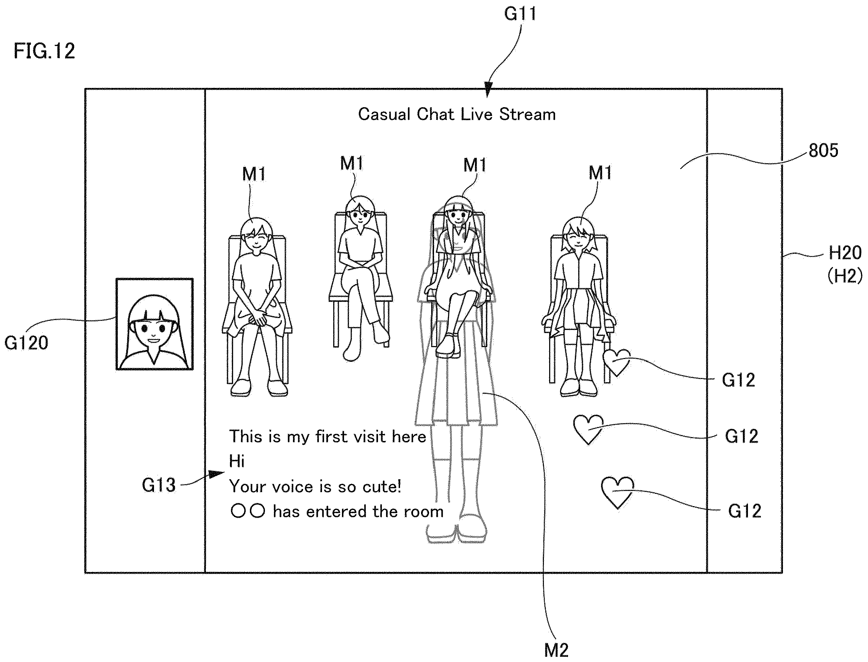

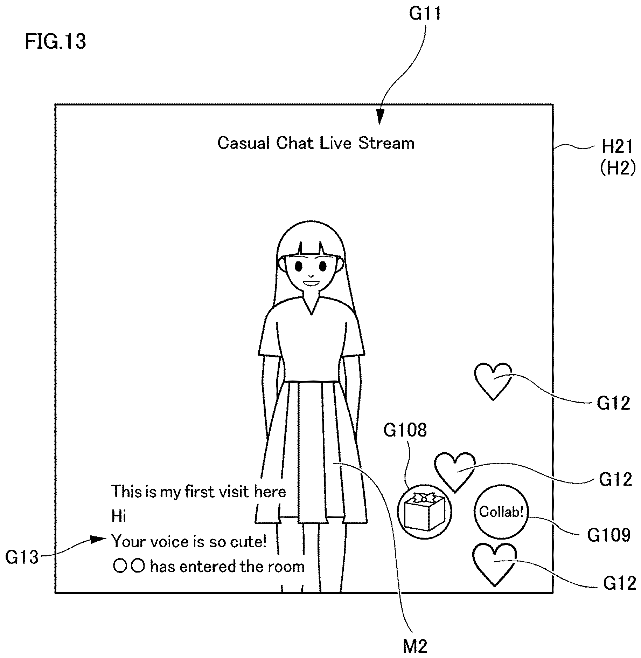

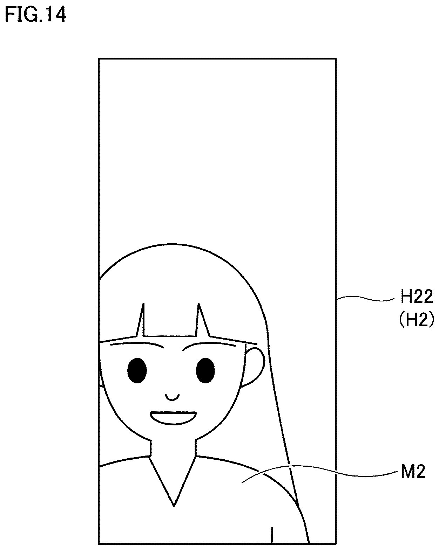

FIGS. 8A and 8B are explanatory diagrams of a virtual space corresponding to a distribution image: FIG. 8A is a schematic side view, and FIG. 8B is a schematic top plan view. In FIGS. 8A and 8B, a distributor user is denoted by reference numeral 808, and the position of the distributor avatar M2 corresponding thereto is schematically indicated with a dotted enclosure. FIG. 9 is a diagram for explaining the layered structure of an image of distributor user-created specific content (hereinafter referred to as "distribution image H2"). FIG. 10 is an explanatory diagram illustrating the relationship between a mirror and each layer of the distribution image H2 as viewed from above. FIG. 11 is a diagram for explaining the interface display layer J2 related to a distribution image H20 for the distributor user. FIG. 12 is a diagram illustrating an example of the distribution image H2 that the distributor user views through a head-mounted display (an example of a first wearable device). FIG. 13 is a diagram illustrating an example of the distribution image H2 that a viewer user views through a head-mounted display (an example of a second wearable device). FIG. 14 is a diagram illustrating an example of the distribution image H2 for smartphones. Note that the distribution image H2 illustrated in FIG. 14 is an image that a user views not through a head-mounted display, and the image can be used for similar devices other than smartphones.

The distribution image H2 corresponds to an image related to a virtual space for the creation of specific content by the distributor user (hereinafter referred to as "content creation space") or a similar virtual space, where the distributor avatar M2 is placed. The content creation space may correspond to a space such as, for example, a studio in the real world. The distributor user can perform activities to create specific content in the content creation space.

In this embodiment, examples of the distribution image H2 include the distribution image H20 for the distributor user (see FIG. 12), a distribution image H21 for a viewer user that can be viewed through a head-mounted display (see FIG. 13), and a distribution image H22 for a viewer user that can be viewed without a head-mounted display (hereinafter also referred to as "distribution image H22 for smartphones") (see FIG. 14). In the following, the distribution image H2 corresponds to any of these images unless otherwise specified.

In this embodiment, the distribution image H2 includes, for example, the distributor avatar display layer J0, the interface display layer J2 (an example of a layer related to a first user interface), the auxiliary information display layer J5, the user avatar display layer J1, and the background layer J3, which are arranged in this order from the front side. In a modification, the distribution image H2 may include other layers such as those mentioned previously, or it may not include some of the above layers (e.g., the auxiliary information display layer J5 and/or the background layer J3). In addition, the interface display layer J2 and the auxiliary information display layer J5 may be integrated as appropriate.

FIG. 9 illustrates an example of the arrangement of the distributor avatar display layer J0, the interface display layer J2, the auxiliary information display layer J5, the user avatar display layer J1, and the background layer J3 as viewed from above together with the predetermined reference axis I that passes through the position of the distributor user (the position of the distributor avatar M2) .

In the embodiment, as illustrated in FIG. 9, the distributor avatar display layer J0, the interface display layer J2, the auxiliary information display layer J5, the user avatar display layer J1, and the background layer J3 are arranged so as to form vertical planes at different distances d1 to d5 along the direction of the user's gaze passing through the predetermined reference axis I as viewed from above. The distances d1 to d5 each correspond to the distance between a corresponding one of the layers and the user. The distance d5 related to the background layer J3 may be infinite, or it may be a distance that depends on the farthest plane from the viewpoint of a virtual camera (far clip plane). The interface display layer J2 may be located in the plane closest to the far clip plane of the virtual camera (near clip plane). The viewpoint of the distributor user and the virtual camera may be set at the same position as the face of the distributor avatar M2 or a head object, and the virtual camera may have an optical axis that lies in the forward direction from the viewpoint of the distributor avatar M2. The arms and hands of the distributor avatar M2 (hand and arm movements as the user puts their hands forward for the operation) may be rendered without rendering the face and head of the distributor avatar M2 from the viewpoint of the distributor user. In this case, however, the distributor avatar M2 may be rendered in the distributor avatar display layer J0 for another user (e.g., a viewing user). The distance d2 of the interface display layer J2 may be set within the user's reach, as described above. In addition, the distance d2 may be adjustable for each user. The distance d2 may also be the same as the diameter r1 (see FIG. 5) described above. With this, the interface display layer J2 can be formed at a distance appropriate to the length of the user's hand and preference. Furthermore, when the distance d2 is the same as the diameter r1 (see FIG. 5), the same (common) operability can be achieved between the distribution image H20 for the distributor user and the home image H1, which enhances convenience.

The content creation space is an arbitrary virtual space where the distributor avatar M2 is active. In the example of FIGS. 8A and 8B, the content creation space includes a distribution room 800, in which there may be placed a closet 801 for changing the clothes of the distributor avatar M2 and a table 802. The distributor user can select a desired avatar item from among avatar items in the closet 801 to make the distributor avatar M2 prepared (or ready). An avatar item is an item that is rendered in association with an avatar such as the distributor avatar M2. Examples of avatar items may include hairstyle, clothing, equipment, skin color, and the like.

In the content creation space of the embodiment, a mirror 805 is arranged in the distribution room 800 as a preferred example. The mirror 805 has the property of reflecting light (visible light), like a mirror in the real world. The image reflected in the mirror 805 corresponds to the distribution image H20. Therefore, the distributor user can position the distributor avatar M2 that corresponds to themself in front of the mirror 805 to check the various states of the distributor avatar M2 (and the states of the distribution image H20 accordingly) corresponding to their various states (orientation, position, and movement) while looking at the front (the mirror 805). Thus, the distributor user can check the various states (orientation, position, and movement) of themself as well as the states of the distributor avatar M2 corresponding thereto (and the states of the distribution image H20 accordingly) while facing the mirror 805 (facing forward) with their gaze directed at the mirror 805. In this manner, the distributor user can check their movements and correct them as appropriate in real time while facing the mirror 805. As a result, the distributor user can easily create the desired distribution image H20 as envisioned.

FIG. 10 illustrates the positional relationship among the mirror 805 in the distribution room 800, the distributor user, and each layer of the distribution image H2 as viewed from above. Range R502 in FIG. 10 corresponds to range R501 in FIG. 9. The range R502 corresponds to the field of view through the mirror 805 from the viewpoint of the distributor user looking at the front. Assuming that the virtual camera is located in the mirror 805, the range R502 also corresponds to the field of view of the virtual camera. In this case, the virtual camera in the mirror 805 can perform the same function as the mirror 805 by displaying a captured image on the mirror 805.

The distributor avatar is rendered in the distributor avatar display layer J0. More specifically, the distributor avatar M2 is rendered in the distributor avatar display layer J0 so as to correspond to the various states (orientation, position, and movement) of the distributor user standing in front of the mirror 805. The various states (orientation, position, and movement) of the distributor user can be obtained through the input unit 24 as described above.

The interface display layer J2 is preferably arranged with reference to the location of the distributor user standing in front of the mirror 805. In other words, when standing in front of the mirror 805, the distributor user is positioned in a predetermined positional relationship with the interface display layer J2. In this embodiment, with reference to the location of the distributor user standing in front of the mirror 805, the interface display layer J2 is arranged within a range reachable by the user at that location. The user may be able to change the positional relationship as needed. This enables the interface display layer J2 to be tailored to the user's preferences and physique.

The interface display layer J2 preferably includes one or more operation areas that function as the input unit 24. These operation areas may serve as selection buttons that can be selected by the distributor user. For example, the distributor user may be able to select (operate) a desired selection button by a non-contact user input.

Operating the operation areas may implement various processes of any type (an example of a variety of first processes). For example, the various processes may include at least one of the following: a process to start distributing specific content, a process to end the distribution of the specific content, an audio input process, a process for the distributor user to receive a gift, a process of drawing lots for items (e.g., items related to an avatar), a process of selecting/replacing various items, a text input process, a process of accepting other users, a process of changing the values of parameters of distribution content (e.g., various parameters of the distribution image H2, which will be described later), and a process of transitioning to a state where any of these processes can be performed.

FIG. 11 illustrates an example of operation areas G100 in the form of various icons in the distribution image H20 for the distributor user. In the example of FIG. 11, the operation areas G100 include an operation area G101 for chatting (commenting), an operation area G102 for taking a screenshot, an operation area G103 for playing games, an operation area G104 for sharing other video content (including a case where the viewer user and the distributor user share and view the same video, etc.), an operation area G105 for playing a gacha (lottery) game, and the like. Incidentally, any items may be won through a gacha game, and an example of such an item may be an avatar item.

In the interface display layer J2, the operation areas may be displayed all the time or only on specific occasions. This makes it possible to expand the display area for the distributor avatar M2 to enable the display of the entire distributor avatar M2 while allowing the user to operate the operation areas in the interface display layer J2.

In the interface display layer J2, specific operation areas may be displayed in the same manner as the operation areas G300 related to the home image H1 described above. In this case, also, there may be front and back operation areas in the interface display layer J2, which can be switched in the manner described above with reference to FIGS. 7A and 7B.

In a preferred embodiment, the operation areas in the interface display layer J2 include an operation area G120 (hereinafter also referred to as "smartphone small window G120") for adjusting the various parameters of the distribution image H2. Part or all of the distribution image H21 for viewer users and/or part or all of the distribution image H22 for smartphones may be displayed in the smartphone small window G120.

The various parameters of the distribution image H2 that can be adjusted through the smartphone small window G120 may be, for example, parameters related to the virtual camera. Specifically, the parameters may include brightness, distance to the virtual camera (i.e., the distance between the mirror 805 and the distributor user), the direction of the optical axis of the virtual camera, the lateral position of the virtual camera (position relative to the distributor user in the lateral direction that intersects the direction of the optical axis), zoom (magnification), and the like. For example, the distributor user may be able to zoom in or out an image in the smartphone small window G120 by, for example, pinching in or out using the smartphone small window G120 as a smartphone screen. The distributor user may also be able to move the image in the smartphone small window G120 in parallel by swiping. The distributor user may further be able to change the position of the virtual camera (position relative to themself) by performing an operation to move the position of the smartphone small window G120. In addition, by controlling the state of the virtual camera through the smartphone small window G120, the distributor user may be able to switch between a tracking mode in which the virtual camera automatically follows the movement of the distributor user and a fixed mode in which the position of the virtual camera is fixed. In this case, the distributor user can use the tracking mode to perform distribution while moving. By controlling the state of the virtual camera through the smartphone small window G120, the distributor user may also be able to create a status that they do not let viewer users view, such as an away from keyboard (AFK) status or a mute status. This improves convenience for the distributor user while preventing an increase in processing load due to the rendering of unnecessary objects.

While wearing a head-mounted display or the like, the user tends to have poor operability in adjusting the various parameters of the distribution image H2 compared to when operating in a real space. However, the provision of the smartphone small window G120 improves the operability.

Furthermore, when the distribution image H22 for smartphones is displayed in the smartphone small window G120, the distributor user can create specific content while checking the distribution image H22 to be viewed on a smartphone along with the distribution image H20 that substantially matches the distribution image H21 to be viewed on a head-mounted display. In place of or in addition to the smartphone small window G120, there may be provided a small window for other viewing devices such as a tablet small window. The distributor user may be able to select a desired small window and display it in the distribution image H20.

In the example of FIG. 12, the smartphone small window G120 is displayed adjacent to the mirror 805 that reflects the distributor avatar M2. The smartphone small window G120 may display the distribution image H22 that is displayed on smartphones (see FIG. 14). In this case, the distributor user can perform distribution while checking in real time the state of the distribution image H22 displayed on the terminal device 20 of a viewer user who is viewing the image on a smartphone.

In a modification, the distribution image H20 may refer to both an image being distributed and a prepared image to be distributed. In the case of a prepared image to be distributed, an operation area G106 (see FIG. 11) for opening the closet 801 (see FIG. 8A) to change clothes, an operation area G107 (see FIG. 11) for starting distribution, and the like may be rendered in the interface display layer J2.

In the auxiliary information display layer J5, text information such as a support message or a gift item from a viewer user of specific content related to the distribution image H2 may be rendered in real time. This allows the distributor user to enjoy the reaction of viewer users, interaction with viewer users, and the like while distributing specific content. The distribution name, title, and the like of specific content may also be rendered in the auxiliary information display layer J5. Referring to FIG. 12, a distribution name G11 "Casual Chat Live Stream", heartshaped gift objects G12, and several comments G13 such as "This is my first visit here" are rendered in the example illustrated therein.

The viewer avatar M1 of a viewer user who is viewing specific content related to the distribution image H2 may be rendered in the user avatar display layer J1. This allows the distributor user to keep track of the number and state of viewer users while performing distribution. The viewer avatar M1 may be rendered in the user avatar display layer J1 so as to correspond to the state (orientation, position, and movement) of its corresponding viewer user. With this, the distributor user can keep track of the state of viewer users while performing distribution.

In the above case, the distributor avatar M2 may be rendered translucent in the distributor avatar display layer J0 so that the distributor user can easily see the state of the user avatar display layer J1. This allows the distributor user to easily check the state of the user avatar display layer J1 behind the distributor avatar M2. The translucent state and the solid state of the distributor avatar M2 may be switchable by an input from the distributor user. This makes it easier for the distributor user to selectively check the state of the distributor avatar M2 and the state of the user avatar display layer J1 behind the distributor avatar M2.

The wall of the distribution room 800 or the like may be rendered in the background layer J3. Alternatively, a view through the wall of the distribution room 800 may be rendered in the background layer J3. The viewer avatar M1 of a viewer user who is viewing specific content related to the distribution image H2 may enter a different virtual space (hereinafter referred to as "viewing space") than the content creation space. In this case, the background related to the viewing space may be rendered in the background layer J3. The distribution image H21 for a viewer user (see FIG. 13), which is an image of the viewing space, may have the background layer J3 different from that of the distribution image H20 for the distributor user (see FIG. 12). In this manner, the viewing space may be inconsistent with the virtual space (content creation space) represented by the distribution image H20 for the distributor user. Thus, the distribution image H21 for a viewer user can be optimized from a different perspective than the distribution image H20 for the distributor user.

In a modification, the distribution room 800 may have a half-silvered mirror (one-way mirror) wall 810 on the front side, as schematically illustrated in FIG. 8B. In such a case, while the inside of the room can be seen through the wall 810 from the outside, the outside of the room cannot be seen from the inside as the wall 810 has a reflective effect like the mirror 805. Accordingly, the distributor user can use the wall 810 in the same way as the mirror 805 described above to perform distribution. On the other hand, a viewer user can view the distributor user (the distributor avatar M2) in the distribution room 800 through the wall 810. In this case, the background layer J3 of the distribution image H2 may include a drawing of a specially designed stage or the like instead of the inside of the distribution room 800.

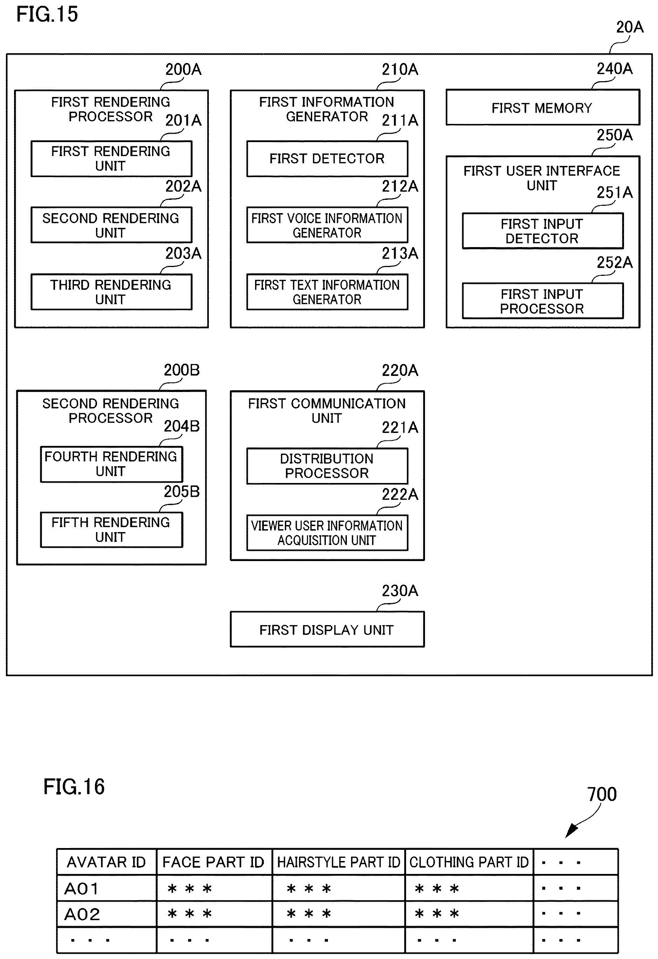

Next, examples of the configuration of the virtual reality generation system 1 described above will be described in order with reference to FIG. 15.

FIG. 15 is a schematic block diagram illustrating the functions of the terminal device 20A on the content distributor side. FIG. 16 is an explanatory diagram illustrating an example of information for rendering an avatar. In the following description made in connection with FIGS. 15 and 16, the distributor user refers to one distributor user, and the distribution image H2 (H20) refers to the distribution image H2 that forms specific content of the one distributor user unless otherwise specified.

As illustrated in FIG. 15, the terminal device 20A includes a first rendering processor 200A, a second rendering processor 200B, a first information generator 210A, a first communication unit 220A, a first display unit 230A, a first memory 240A, and a first user interface unit 250A.

When executed by the terminal controller 25 of the terminal device 20A illustrated in FIG. 1 in cooperation with the terminal communication unit 21, the terminal memory 22, the display unit 23, and the input unit 24, a virtual reality application implements the functions of the first rendering processor 200A, the second rendering processor 200B, the first information generator 210A, the first communication unit 220A, the first display unit 230A, and the first user interface unit 250A. Meanwhile, the first memory 240A can be implemented with the terminal memory 22 of the terminal device 20A illustrated in FIG. 1.

The first rendering processor 200A draws or renders the above-described distribution image H20 for the distributor user (see FIG. 12) (an example of an image of a first virtual space). For example, the first rendering processor 200A generates the distribution image H20 for the distributor user (see FIG. 12) at a predetermined frame rate.

The first rendering processor 200A includes a first rendering unit 201A, a second rendering unit 202A, and a third rendering unit 203A.

The first rendering unit 201A renders the image area of the distributor avatar display layer J0 (an example of a first image area) in the distribution image H20 for the distributor user (see FIG. 12). As to the distributor avatar display layer J0 of the distribution image H20, a description has already been given above. The first rendering unit 201A may render the distributor avatar M2 in the image area of the distributor avatar display layer J0 based on, for example, avatar rendering information (see Table 700 in FIG. 16) stored in the first memory 240A. FIG. 16 schematically illustrates Table 700 that provides an example of the avatar rendering information.

In the avatar rendering information, each avatar ID is associated with face part ID(s), hairstyle part ID(s), clothing part ID(s), and the like. Information on parts related to appearance, such as face part ID, hairstyle part ID, and clothing part ID, is parameters that characterize an avatar and may be selected by each user. There are prepared a plurality of types of appearance-related information such as, for example, face part ID, hairstyle part ID, and clothing part ID for avatars. Part IDs may be prepared for individual parts of a face such as a contour, eyes, mouth, nose, and the like as face part IDs, and information related to the face part IDs may be managed by a combination of the part IDs required to constitute the face. In this case, an avatar can be rendered not only on the server 10 but also on the terminal device 20 based on part IDs related to its appearance, which are associated with a corresponding avatar ID.

When, for example, the distributor avatar M2 opens the closet 801 (see FIG. 8A) and changes its clothes (i.e., when an ID related to hairstyle or clothes is changed), the first rendering unit 201A updates the appearance of the distributor avatar M2 accordingly.

The first rendering unit 201A also changes the state of the distributor avatar M2 based on a detection result (detection result of the distributor user's state) received from a first detector 211A (described later) of the first information generator 210A. In this embodiment, the first rendering unit 201A renders the distributor avatar M2 such that the distributor avatar M2 replaces or substitutes for the distributor user who is facing the mirror 805 (see FIG. 8A) as described above.

For example, when the distributor avatar M2 is in the form of a character having a front side, the first rendering unit 201A may change the orientation of the distributor avatar M2 in conjunction with the orientation of the distributor user in such a manner that the distributor avatar M2 turns to the left when the distributor user turns to the right, and the distributor avatar M2 looks down when the distributor user looks down. In this case, the first rendering unit 201A may change the orientation of only the face, only the body, or both of them. This increases the consistency (linkage) in orientation or direction between the distributor avatar M2 and the distributor user, and expressions can be diversified with the orientation of the distributor avatar M2.

For another example, when the distributor avatar M2 is in the form of a character with a direction of gaze, the first rendering unit 201A may change the direction of the gaze of the distributor avatar M2 in conjunction with the direction of the gaze of the distributor user in such a manner that the gaze of the distributor avatar M2 turns to the left when the distributor user's gaze turns to the right, and the gaze of the distributor avatar M2 turns down when the distributor user's gaze turns down. The first rendering unit 201A may also cause the distributor avatar M2 to make various eye movements, such as blinking, in conjunction with the user's eye movements. The same applies to the movements of the nose, mouth, and the like. This increases the consistency (linkage) in each part between the distributor avatar M2 and the distributor user, and the facial expressions of the distributor avatar M2 can be diversified.

For still another example, when the distributor avatar M2 is in the form of a character with hands, the first rendering unit 201A may move the hands of the distributor avatar M2 in conjunction with the hand movements of the distributor user in such a manner that the distributor avatar M2 raises its left hand when the distributor user raises their right hand, and the distributor avatar M2 raises both hands when the distributor user raises both hands. The first rendering unit 201A may also move each part of the hands, such as fingers, in conjunction with the user's movements. The same applies to other parts such as feet. This increases the consistency (linkage) between the distributor avatar M2 and the distributor user, and expressions can be diversified with the movements of the parts of the distributor avatar M2 and the like.

In addition, when the position (rendering position) of the distributor avatar M2 is variable in the distribution image H20 (i.e., when the distributor avatar M2 is a character whose position changes), the first rendering unit 201A may change the position of the distributor avatar M2 in the distribution image H20 according to the position of the distributor user (position relative to the mirror 805) in such a manner that the distributor avatar M2 moves to the left when the distributor user moves to the right, and the distributor avatar M2 moves away when the distributor user moves away from the mirror 805. This increases consistency (linkage) in movement (position) between the distributor avatar M2 and the distributor user, and expressions can be diversified through changes in the position of the distributor avatar M2.

The second rendering unit 202A renders the image area of the interface display layer J2 (an example of a second image area) in the distribution image H20 for the distributor user (see FIG. 12). As to the interface display layer J2 of the distribution image H20, a description has already been given above.

The second rendering unit 202A renders the operation areas G100 (see FIG. 11) and the smartphone small window G120 (see FIG. 12) described above. The second rendering unit 202A may always render the operation areas G100 and the smartphone small window G120 or may skip rendering some or all of them as appropriate. For example, the second rendering unit 202A may output operation areas G117 and G118 (see FIG. 11) for accepting/declining a collaboration request in response to a collaboration acceptance/declination instruction from a viewer user information acquisition unit 222A (described later). This simplifies the display of the interface display layer J2 (facilitates the visibility thereof) while increasing operation variations that can be implemented through the interface display layer J2.

The third rendering unit 203A renders the image areas of the remaining layers (an example of a third image area) in the distribution image H20 for the distributor user (see FIG. 12). In other words, the third rendering unit 203A renders the image areas of layers other than the distributor avatar display layer J0 and the interface display layer J2 in the distribution image H20. For example, the third rendering unit 203A may render the image areas of the background layer J3 and the auxiliary information display layer J5 depending on the layered structure of the distribution image H20.

In this embodiment, the distribution image H20 includes, as an example, the distributor avatar display layer J0, the interface display layer J2, the auxiliary information display layer J5, the user avatar display layer J1, and the background layer J3, which are arranged in this order from the front side, as described above.

Accordingly, the third rendering unit 203A of the embodiment renders the image areas of the auxiliary information display layer J5, the user avatar display layer J1, and the background layer J3.

For example, in response to a gift rendering instruction from the viewer user information acquisition unit 222A (described later), the third rendering unit 203A may render a gift object in the image area of the auxiliary information display layer J5 based on rendering information for the gift object stored in the first memory 240A. The first memory 240A may store rendering information for each gift object in association with a gift ID. The gift rendering instruction may include a gift ID that identifies the gift object to be rendered and coordinate information. The coordinate information indicates the rendering position in the distribution image H20 and may change in time series. The coordinate information may include motion information that indicates the motion of the gift object. The motion information may indicate a motion such as, for example, falling while spinning. This allows for diversification of the representation of gift objects.

For another example, in response to a viewer user rendering instruction from the viewer user information acquisition unit 222A (described later), the third rendering unit 203A may render the viewer avatar M1 (the viewer avatar M1 of a viewer user) in the image area of the user avatar display layer J1 based on rendering information for the avatar (see Table 700 in FIG. 16) stored in the first memory 240A. The viewer user rendering instruction may include a variety of information for rendering the viewer avatar M1 related to a viewer user who is viewing specific content. For example, the information for rendering the viewer avatar M1 may include information on the viewer avatar M1 (e.g., avatar ID, face part ID, hairstyle part ID, clothing part ID, etc.) and coordinate information. In addition, in the case where the viewer avatar M1 is designed to move, the viewer user rendering instruction may include information that indicates the state of the viewer user (or information that indicates the state of the viewer avatar M1 based thereon). This makes it possible to represent the movement of the viewer user in the distribution image H20 for the distributor user, thereby enhancing the sense of unity between the distributor user and the viewer user.

For still another example, the third rendering unit 203A may render various comments in the image area of the user avatar display layer J1 in response to comment rendering instructions from the viewer user information acquisition unit 222A (described later). The comment rendering instructions may each include a comment ID and coordinate information. The first memory 240A may store rendering information for a fixed-form comment in association with a comment ID. Text information (e.g., a message such as a chat), which may be received from the terminal device 20B on the content viewer side, may be used instead of the comment ID associated with the fixed-form comment. This allows each viewer user to send a unique message or the like, thereby enhancing the sense of unity between the distributor user and the viewer user in the distribution image H20 for the distributor user.

The third rendering unit 203A may also render a background image associated with a background ID selected by the distributor user in the background layer J3. The first memory 240A may store background images each in association with a background ID. The background image may be customized by the distributor user.

The second rendering processor 200B renders the above-described home image H1 (see FIG. 6) (an example of an image of a second virtual space). For example, the second rendering processor 200B generates the home image H1 (see FIG. 6) at a predetermined frame rate.

The second rendering processor 200B includes a fourth rendering unit 204B and a fifth rendering unit 205B.

The fourth rendering unit 204B renders the image area of the interface display layer J2 (an example of a fourth image area) in the home image H1 (see FIG. 6). As to the interface display layer J2 in the home image H1, a description has already been given above. In response to a command from a first input processor 252A (described later), the fourth rendering unit 204B may change the arrangement of the operation areas G300 or the like (see FIGS. 6 and 7A).

The fifth rendering unit 205B renders the image areas of the remaining layers (an example of a fifth image area) in the home image H1 (see FIG. 6). In other words, the fifth rendering unit 205B renders the image areas of layers other than the interface display layer J2 in the home image H1. For example, the fifth rendering unit 205B may render the image areas of the background layer J3 and the auxiliary information display layer J5 depending on the layered structure of the home image H1. With this, it is possible to efficiently provide various types of information that users may need without significantly increasing the processing load related to rendering.

In this embodiment, the home image H1 includes, as an example, the interface display layer J2, the auxiliary information display layer J5, and the background layer J3, which are arranged in this order from the front side, as described above.

Accordingly, the fifth rendering unit 205B of the embodiment renders the image areas of the auxiliary information display layer J5 and the background layer J3.

The first information generator 210A generates various types of information related to the distributor user (hereinafter referred to as "distributor user information"). The distributor user information includes information that indicates the state of the distributor user (the state of the distributor user detected by the first detector 211A), which is used in the first user interface unit 250A (described later). The distributor user information also includes information required to render the distribution image H21 for a viewer user (see FIG. 13). For example, the distributor user information includes information for rendering the distributor avatar M2 (e.g., avatar ID, face part ID, hairstyle part ID, clothing part ID, etc.). When distributor user-created specific content includes the voice of the distributor user, the distributor user information may include voice information acquired through a microphone or the like of the input unit 24. This allows various types of information constituting the specific content to be handled separately, enabling distributed processing.

In this embodiment, the first information generator 210A includes the first detector 211A, a first voice information generator 212A, and a first text information generator 213A.

The first detector 211A detects the state of the distributor user (orientation, position, movement, and the like of the user) . The first detector 211A may detect the state of the distributor user through the input unit 24 described above. While the home image H1 is being rendered, the first detector 211A may detect the state of the distributor user, for example, at intervals corresponding to the frame rate of the home image H1. In addition, while the distribution image H20 for the distributor user (see FIG. 12) is being rendered, the first detector 211A may detect the state of the distributor user, for example, at intervals corresponding to the frame rate of the distribution image H20 for the distributor user. With this, it is possible to detect (update) the state of the distributor user (and the display of the distributor avatar M2 accordingly) at a high frequency.

The first detector 211A may be switched between ON and OFF states in response to, for example, a distributor user's operation. For example, when the distributor user operates a distribution start button (see the operation area G107 in FIG. 11), which can be displayed in the interface display layer J2, a first input detector 251A (described later) may detect the operation, and the first detector 211A may be switched to the ON state in response to a command from the first input processor 252A (described later). This simplifies the display of the interface display layer J2 (facilitates the visibility thereof) while increasing operation variations that can be implemented through the interface display layer J2. Simplifying the display of the interface display layer J2 can enhance the visibility of layers behind it.

The first voice information generator 212A generates voice information based on the speech of the distributor user. For example, the first voice information generator 212A generates the distributor user's voice information through the microphone or the like of the input unit 24. The first voice information generator 212A may process voice or audio data obtained through the input unit 24 to generate the distributor user's voice information. In this case, the processing method may be selectable by the distributor user, or the voice data may be processed manually by the distributor user.

The first voice information generator 212A may be switched between ON and OFF states in response to, for example, a distributor user's operation. For example, when the distributor user operates a mute button (not illustrated), which can be displayed in the interface display layer J2, the first input detector 251A (described later) may detect the operation, and the first voice information generator 212A may be switched to the OFF state in response to a command from the first input processor 252A (described later).

The first text information generator 213A generates text information based on the speech and/or text input of the distributor user. For example, the first text information generator 213A generates text information when the distributor user interacts (chats, etc.) with a viewer user.

The first text information generator 213A may be switched between ON and OFF states in response to, for example, a distributor user's operation. For example, when the distributor user operates a comment button (see the operation area G101 in FIG. 11), which can be displayed in the interface display layer J2, the first input detector 251A (described later) may detect the operation, and the first text information generator 213A may be switched to the ON state in response to a command from the first input processor 252A (described later). This simplifies the display of the interface display layer J2 (facilitates the visibility thereof) while increasing operation variations that can be implemented through the interface display layer J2 .

The distributor user information generated by the first information generator 210A may include information that indicates the state of the distributor user (or information that indicates the state of the distributor avatar M2 based thereon (hereinafter simply referred to as "distributor avatar M2 state information")) and information on the distributor avatar M2 (e.g., avatar ID, face part ID, hairstyle part ID, clothing part ID, etc.), together with voice or audio information and text information if necessary, as a set. In this case, the first information generator 210A may generate the distributor user information such that a timestamp is added to dynamically changing information such as distributor avatar M2 state information, voice information, and text information. Thus, having received the distributor user information, the terminal device 20B on the content viewer side can output the distribution image H21 as described above along with audio output as distributor user-created specific content based on the received distributor user information.

The first communication unit 220A communicates with the server 10 and other terminal devices 20 (e.g., the terminal device 20B on the content viewer side). In this embodiment, the first communication unit 220A includes a distribution processor 221A and the viewer user information acquisition unit 222A.

The distribution processor 221A sends the distributor user information generated by the first information generator 210A to the terminal device 20B on the content viewer side. In a modification, the distribution processor 221A may send video data based on the distribution image H20 created by the first rendering processor 200A to the terminal device 20B.

The distribution processor 221A may send the distributor user information to the terminal device 20B on the content viewer side in real time (i.e., may perform live streaming) in response to, for example, a distributor user's operation. The distribution processor 221A may also send the distributor user information to the terminal device 20B on the content viewer side in non-real time. When sending the distributor user information in non-real time, the distribution processor 221A may send video data manually edited by the distributor user or the edited distributor user information to the terminal device 20B on the content viewer side.

The viewer user information acquisition unit 222A acquires various types of viewer user information from the terminal device 20B on the content viewer side. The viewer user information acquisition unit 222A generates instructions, such as a gift rendering instruction, a viewer user rendering instruction, a comment rendering instruction, and a collaboration acceptance/declination instruction mentioned above, based on the acquired viewer user information. The viewer user information includes information required to generate these instructions, i.e., a gift rendering instruction, a viewer user rendering instruction, a comment rendering instruction, and a collaboration acceptance/declination instruction, and the like.

The first display unit 230A outputs the distribution image H20 for the distributor user (see FIG. 12) created by the first rendering processor 200A and the home image H1 created by the second rendering processor 200B to the display unit 23 of the terminal device 20A. Incidentally, in this embodiment, the display unit 23 is in the form of, for example, a head-mounted display as described above.

The first memory 240A stores the above-described avatar rendering information (see Table 700 in FIG. 16) and the like.

The first user interface unit 250A detects various inputs from the distributor user through the input unit 24 and performs processes according to the respective inputs. The first user interface unit 250A includes the first input detector 251A and the first input processor 252A.

The first input detector 251A detects various inputs provided by the distributor user through the interface display layer J2 described above. For example, the first input detector 251A detects inputs provided through the operation areas G100 (see FIG. 11), the smartphone small window G120 (see FIG. 12), the operation areas G300, and the like.

The first input detector 251A may detect an input provided by the distributor user through the interface display layer J2 based on the state of the distributor user detected by the first detector 211A and the state of the interface display layer J2 (e.g., the positions and display states of the operation areas G100 and the smartphone small window G120). For example, when detecting a tapping motion on one operation area among the operation areas G100, the first input detector 251A may detect it as a selection operation for selecting the one operation area. This allows the user to perform a selection operation with a simple motion in a virtual space.

The first input processor 252A performs various processes (an example of a variety of second processes) according to various inputs detected in the home image H1 by the first input detector 251A. The various processes may be of any type. As described above, the various processes may include, for example, a process of changing the arrangement of the user interface (e.g., the planar operation areas G300), a process of moving a user to an arbitrary or specific location in a virtual space (e.g., moving the distributor user to a place for distribution), and the like. The various processes may involve screen transitions (e.g., transfer from one virtual space to another) and various rendering processes by the second rendering processor 200B, as appropriate.

The first input processor 252A also performs various processes (an example of a variety of first processes) according to various inputs detected in the distribution image H20 for the distributor user (see FIG. 12) by the first input detector 251A. The various processes may be of any type. As described above, the various processes may include, for example, a process to start distributing specific content, a process to end the distribution of the specific content, an audio input process, a process for the distributor user to receive a gift, and the like. The various processes may involve screen transitions (e.g., transfer from one virtual space to another) and various rendering processes by the first rendering processor 200A, as appropriate. For example, a process of transitioning to a state where a process for receiving a gift can be performed may involve the rendering of notification information (information notifying that a gift has been given) by the third rendering unit 203A of the first rendering processor 200A, the rendering of a receive button by the second rendering unit 202A of the first rendering processor 200A, and the like.

As described above, according to the embodiment, the distribution image H20 for the distributor user has a plurality of layers, and image processing is performed with respect to each of the layers. Therefore, the processing load can be efficiently reduced. For example, when specific content is distributed in video format, the overall processing load in rendering the distribution image H20 for the distributor user can be efficiently reduced by rendering (updating) the image area of the distributor avatar display layer J0 more frequently than the image area of the interface display layer J2. In addition, with the layered structure of the distribution image H20 for the distributor user, it is possible to effectively provide the user with a sense of distance in "space". Furthermore, in the layered structure of the distribution image H20 for the distributor user, the layers can be arranged at an appropriate distance according to, for example, the attributes of their respective image areas. As a result, it is possible to achieve, for example, both the rendering of a highly operable user interface that is unlikely to cause motion sickness and the rendering of the distributor avatar M2 with good visibility.

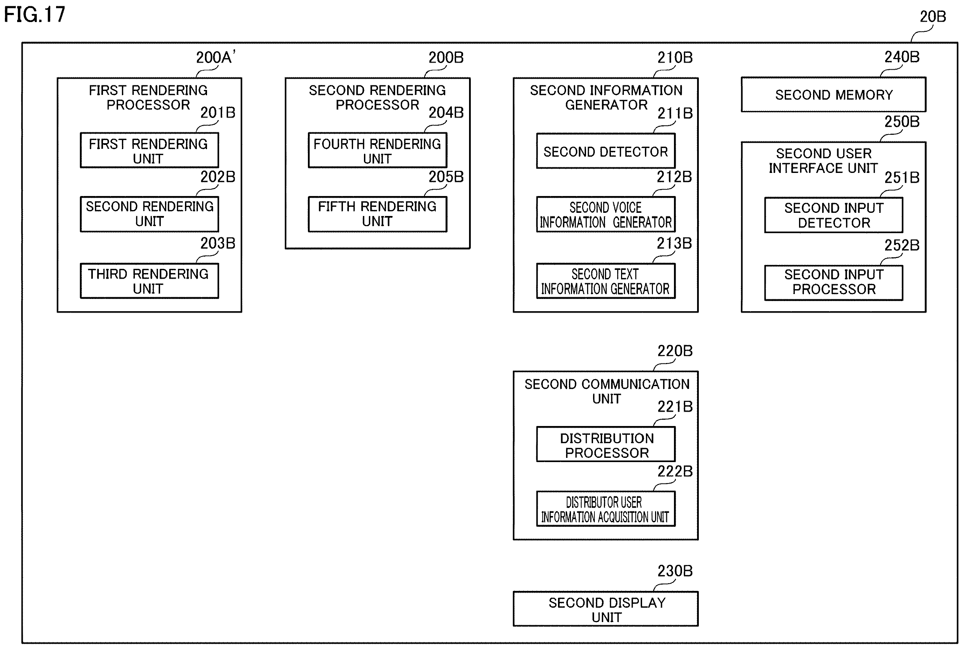

FIG. 17 is a schematic block diagram illustrating the functions of the terminal device 20B on the content viewer side.

As illustrated in FIG. 17, the terminal device 20B includes a first rendering processor 200A', the second rendering processor 200B, a second information generator 210B, a second communication unit 220B, a second display unit 230B, a second memory 240B, and a second user interface unit 250B.

When executed by the terminal controller 25 of the terminal device 20B illustrated in FIG. 1 in cooperation with the terminal communication unit 21, the terminal memory 22, the display unit 23, and the input unit 24, a virtual reality application implements the functions of the first rendering processor 200A', the second rendering processor 200B, the second information generator 210B, the second communication unit 220B, the second display unit 230B, and the second user interface unit 250B. Meanwhile, the second memory 240B can be implemented with the terminal memory 22 of the terminal device 20B illustrated in FIG. 1.

The first rendering processor 200A' renders the distribution image H21 for a viewer user (see FIG. 13) in response to a distributor user rendering instruction from a distributor user information acquisition unit 222B (described later). The distributor user rendering instruction is generated based on distributor user information sent from the terminal device 20A on the content distributor side (distributor user information generated by the first information generator 210A of the terminal device 20A). For example, the first rendering processor 200A' may generate the distribution image H21 for the viewer user (see FIG. 13) at a frame rate corresponding to the update cycle of the distributor user information.

The first rendering processor 200A' includes a first rendering unit 201B, a second rendering unit 202B, and a third rendering unit 203B.

The first rendering unit 201B renders the image area of the distributor avatar display layer J0 (an example of a first image area) in the distribution image H21 for the viewer user (see FIG. 13). As to the distributor avatar display layer J0 of the distribution image H21 for the viewer user, a description has already been given above. The first rendering unit 201B may render the distributor avatar M2 in the image area of the distributor avatar display layer J0 based on the distributor user information and, for example, avatar rendering information (see Table 700 in FIG. 16) stored in the first memory 240A. In this case, the distributor avatar M2 can be rendered with relatively low load processing through the use of the avatar rendering information stored in the first memory 240A.

The first rendering unit 201B has the same function as the first rendering unit 201A of the terminal device 20A on the content distributor side described above and operates in the same manner. In the above case, a distributor user rendering instruction may include various types of information for rendering the distributor avatar M2. More specifically, a distributor user rendering instruction may include information on the distributor avatar M2 (e.g., avatar ID, face part ID, hairstyle part ID, clothing part ID, etc.), information that indicates the state of the distributor user (or information that indicates the state of the distributor avatar M2 based thereon), and the like.

The second rendering unit 202B renders the image area of the interface display layer J2 (an example of a second image area) in the distribution image H21 for the viewer user (see FIG. 13). The second rendering unit 202B has the same function as the second rendering unit 202A of the terminal device 20A on the content distributor side described above and operates in the same manner. Note, however, that the interface display layer J2 of the distribution image H21 for the viewer user may have a different operation area rendered therein than those rendered in the interface display layer J2 of the distribution image H20 for the distributor user (see FIG. 12). For example, as illustrated in FIG. 13, the second rendering unit 202B may render an operation area G108 for giving a gift to the distributor user, an operation area G109 for sending a request for collaborative distribution to the distributor user, and the like. Incidentally, a request for collaborative distribution can be issued from the distributor user side. In this case, an operation area for sending a request for collaborative distribution to the viewer user may be rendered in the distribution image H20 for the distributor user (see FIG. 12). This facilitates collaborative distribution and effectively promotes interaction among users.

The third rendering unit 203B renders the image areas of the remaining layers (an example of a third image area) in the distribution image H21 for the viewer user (see FIG. 13). The third rendering unit 203B has the same function as the third rendering unit 203A of the terminal device 20A on the content distributor side described above and operates in the same manner. However, what is rendered in the auxiliary information display layer J5 may vary as appropriate. For example, as can be seen in FIG. 13, the viewer avatar M1 (see FIG. 12) need not necessarily be rendered in the distribution image H21 for the viewer user.

The second rendering processor 200B renders the above-described home image H1 (see FIG. 6) (an example of an image of a second virtual space). For example, the second rendering processor 200B generates the home image H1 (see FIG. 6) at a predetermined frame rate.

The second rendering processor 200B includes the fourth rendering unit 204B and the fifth rendering unit 205B. The second rendering processor 200B may be configured substantially the same as that of the terminal device 20A. This achieves efficient configuration using common hardware resources.

The second information generator 210B generates various types of viewer user information related to the viewer user. The viewer user information includes information that indicates the state of the viewer user (the state of the viewer user detected by a second detector 211B), which is used in the second user interface unit 250B (described later). The viewer user information also includes information required for the viewer user information acquisition unit 222A of the terminal device 20A on the content distributor side described above to generate a gift rendering instruction, a viewer user rendering instruction, a comment rendering instruction, a collaboration acceptance/declination instruction, and the like.

In this embodiment, the second information generator 210B includes the second detector 211B, a second voice information generator 212B, and a second text information generator 213B.

The second detector 211B detects the state of the viewer user (orientation, position, movement, and the like of the user). The second detector 211B may detect the state of the viewer user through the input unit 24 described above.

While the home image H1 is being rendered, the second detector 211B may detect the state of the viewer user, for example, at intervals corresponding to the frame rate of the home image H1. In addition, while the distribution image H21 for the viewer user (see FIG. 13) is being rendered, the second detector 211B may detect the state of the viewer user, for example, at intervals corresponding to the update cycle of the distributor user information.

The second voice information generator 212B generates voice information based on the speech of the viewer user. For example, the second voice information generator 212B generates the viewer user's voice information through the microphone or the like of the input unit 24. The second voice information generator 212B may process voice or audio data obtained through the input unit 24 to generate the viewer user's voice information. In this case, the processing method may be selectable by the viewer user, or the voice data may be processed manually by the viewer user.

The second voice information generator 212B may be switched between ON and OFF states in response to, for example, a viewer user's operation. For example, when the viewer user operates a mute button (not illustrated), which can be displayed in the interface display layer J2 of the distribution image H21 for the viewer user (see FIG. 13), a second input detector 251B (described later) may detect the operation, and the second voice information generator 212B may be switched to the OFF state in response to a command from a second input processor 252B (described later).

The second text information generator 213B generates text information based on the speech and/or text input of the viewer user. For example, the second text information generator 213B generates text information when the viewer user interacts (chats, etc.) with the distributor user.

The second text information generator 213B may be switched between ON and OFF states in response to, for example, a viewer user's operation. For example, when the viewer user operates a comment button (not illustrated in FIG. 13), which can be displayed in the interface display layer J2, the second input detector 251B (described later) may detect the operation, and the second text information generator 213B may be switched to the ON state in response to a command from the second input processor 252B (described later). This simplifies the display of the interface display layer J2 (facilitates the visibility thereof) while increasing operation variations that can be implemented through the interface display layer J2.

The viewer user information generated by the second information generator 210B may include information that indicates the state of the viewer user (or information that indicates the state of the viewer avatar M1 based thereon (hereinafter simply referred to as "viewer avatar M1 state information")) and information on the viewer avatar M1 (e.g., avatar ID, face part ID, hairstyle part ID, clothing part ID, etc.), together with voice or audio information if necessary, as a set. In this case, the second information generator 210B may generate the viewer user information such that a timestamp is added to dynamically changing information such as viewer avatar M1 state information and voice information. Thus, having received the viewer user information, the terminal device 20A on the content distributor side can render the viewer avatar M1 in the user avatar display layer J1 of the distribution image H20 as described above based on the received viewer user information.

The second communication unit 220B communicates with the server 10 and other terminal devices 20 (e.g., the terminal device 20A on the content distributor side). In this embodiment, the second communication unit 220B includes a distribution processor 221B and the distributor user information acquisition unit 222B.

The distribution processor 221B sends the viewer user information generated by the second information generator 210B to the terminal device 20A on the content distributor side.

The distributor user information acquisition unit 222B acquires distributor user information from the terminal device 20A on the content distributor side and issues a distributor user rendering instruction as described above to the first rendering processor 200A'. As described above, the distributor user information is generated by the distribution processor 221A of the terminal device 20A on the content distributor side.

The second display unit 230B outputs the distribution image H20 and the home image H1 generated by the first rendering processor 200A' and the second rendering processor 200B to the display unit 23 of the terminal device 20B. Incidentally, in this embodiment, the display unit 23 is in the form of, for example, a head-mounted display as described above.

The second memory 240B stores the above-described avatar rendering information (see Table 700 in FIG. 16) and the like.

The second user interface unit 250B detects various inputs from the viewer user through the input unit 24 and performs processes according to the respective inputs. The second user interface unit 250B includes the second input detector 251B and the second input processor 252B.

The second input detector 251B detects various inputs provided by the viewer user through the interface display layer J2 described above. For example, the second input detector 251B detects inputs provided through the interface display layer J2 rendered by the second rendering unit 202B and the fourth rendering unit 204B described above.

The second input detector 251B may detect an input provided by the viewer user through the interface display layer J2 based on the state of the viewer user detected by the second detector 211B and the state of the interface display layer J2 (e.g., the positions and display states of the operation areas G100 and the smartphone small window G120). For example, the second input detector 251B detects various operations that the viewer user has performed on the above-described planar operation areas G300 in the home image H1, various operations that the viewer user has performed on the various operation areas (such as the one for sending a request for collaborative distribution to the distributor user) in the distribution image H21 for the viewer user (see FIG. 13), and the like.

The second input processor 252B performs various processes (an example of a variety of second processes) according to various inputs detected in the home image H1 by the second input detector 251B. The various processes may be of any type. As described above, the various processes may include, for example, a process of changing the arrangement of the user interface (e.g., the planar operation areas G300), a process of moving a user to an arbitrary or specific location in a virtual space (e.g., moving the viewer user to a location for viewing), and the like. The various processes may involve screen transitions (e.g., transfer from one virtual space to another) and various rendering processes by the second rendering processor 200B, as appropriate. For example, a process of transitioning to a state where a process for giving a gift can be performed may involve the rendering of a screen image for selecting a gift by the fourth rendering unit 204B of the second rendering processor 200B.

The second input processor 252B also performs various processes (an example of a variety of second processes) according to various inputs detected in the distribution image H21 for the viewer user (see FIG. 13) by the second input detector 251B. The various processes may be of any type. As described above, the various processes may include, for example, a process to end viewing of specific content, an audio input process, a process for giving a gift to the distributor user, and the like. The various processes may involve screen transitions (e.g., transfer from one virtual space to another) and various rendering processes by the first rendering processor 200A', as appropriate. For example, a process for giving a gift to the distributor user may involve the rendering of notification information (information notifying that a gift has been received) by the third rendering unit 203B of the first rendering processor 200A' and the like.

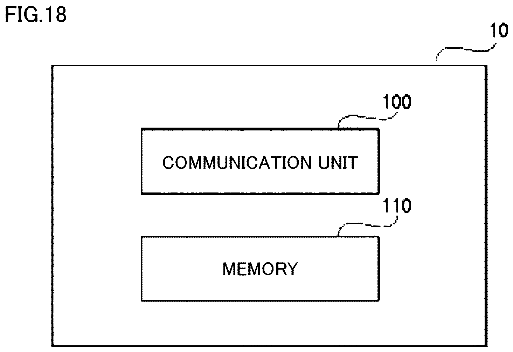

FIG. 18 is a schematic block diagram illustrating the functions of the server 10.

The server 10 mainly includes a communication unit 100 and a memory 110.

The communication unit 100 can communicate various types of information required to distribute and/or view distributor user-created specific content (e.g., distributor user information, viewer user information, etc.) with the terminal device 20A on the content distributor side and/or the terminal device 20B on the content viewer side.

The memory 110 can store the various types of information required to distribute and/or view distributor user-created specific content.

As described above, according to the embodiment, the distribution image H21 for the viewer user has a plurality of layers, and image processing is performed with respect to each of the layers. Therefore, the processing load can be efficiently reduced. For example, of the image areas of the interface display layer J2, those located in the front or center as viewed from the user's viewpoint can be rendered (updated) more frequently than others to efficiently reduce the overall processing load in rendering the distribution image H21 for the viewer user. In addition, with the layered structure of the distribution image H21 for the viewer user, it is possible to effectively provide the user with a sense of distance in "space". Furthermore, in the layered structure of the distribution image H21 for the viewer user, the layers can be arranged at an appropriate distance according to, for example, the attributes of their respective image areas. As a result, it is possible to achieve, for example, both the rendering of a highly operable user interface that is unlikely to cause motion sickness and the rendering of the operation areas G300 with good visibility.

In the embodiment, the server 10 does not have a rendering function for rendering the home image H1 and the distribution image H2 described above, and the rendering function is implemented by the terminal device 20A on the content distributor side and/or the terminal device 20B on the content viewer side, as previously described. However, the server 10 may implement part or all of the rendering function for rendering the home image H1 and/or the distribution image H2. This may apply to other functions than the rendering function as appropriate.

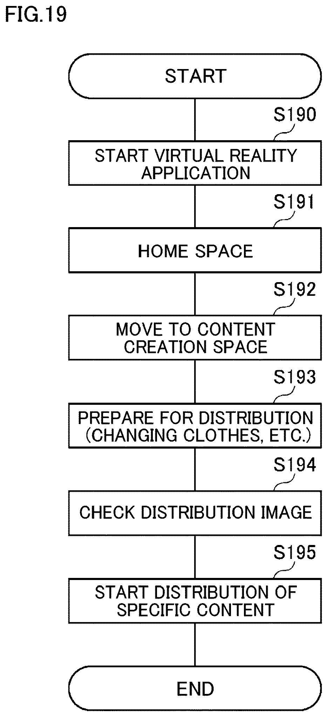

Next, an example of the operation of the virtual reality generation system 1 illustrated in FIG. 1 will be described with reference to FIGS. 19 to 21.

FIG. 19 is a flowchart illustrating an example of the operation of the terminal device 20A on the content distributor side, which is performed in the virtual reality generation system 1 illustrated in FIG. 1, up to the start of the distribution of specific content.

First, a user, who is a distributor user, wears a head-mounted display as the terminal device 20A and starts a virtual reality application (step S190). As a result, the user is located in a home space (step S191), and they can view the home image H1. The user then operates the operation areas of the interface display layer J2 in the home image H1 and moves to the content creation space (step S192). Having moved to the content creation space, the distributor user makes preparations such as changing the clothes of the distributor avatar M2 (step S193). After that, the distributor user stands in front of the mirror 805 and views the distribution image H20 (a prepared image to be distributed) (step S194). Incidentally, as a prepared image to be distributed, the distribution image H20 may include only the distributor avatar display layer J0 and the interface display layer J2, or the image may include only the distributor avatar display layer J0, the interface display layer J2, and the background layer J3. In addition, the operation area G107 (see FIG. 11) for starting distribution may be rendered in the interface display layer J2 of the distribution image H20 as a prepared image to be distributed. In another embodiment, distribution may start as soon as the distributor user moves into the content creation space.

Having decided to start distribution after checking the distribution image H20, the distributor user operates the corresponding operation area G107 (see FIG. 11) in the interface display layer J2 to start the distribution of specific content including the distribution image H20 (step S195). When the distribution of the specific content is started in this manner, the operation areas G300 (see FIGS. 6 and 7A, etc.) that can be used to select the specific content are rendered in the interface display layer J2 of the home image H1 on the terminal device 20B on the content viewer side.

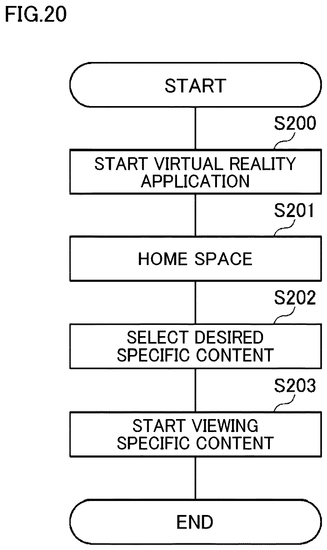

FIG. 20 is a flowchart illustrating an example of the operation of the terminal device 20B on the content viewer side, which is performed in the virtual reality generation system 1 illustrated in FIG. 1, up to the start of viewing specific content.

First, a user, who is a viewer user, wears a head-mounted display as the terminal device 20B and starts a virtual reality application (step S200). As a result, the user is located in a home space (step S201), and they can view the home image H1. The user then operates the operation areas G300 in the interface display layer J2 of the home image H1 to select desired specific content (step S202). In this manner, the viewer user can start viewing the specific content (step S203).

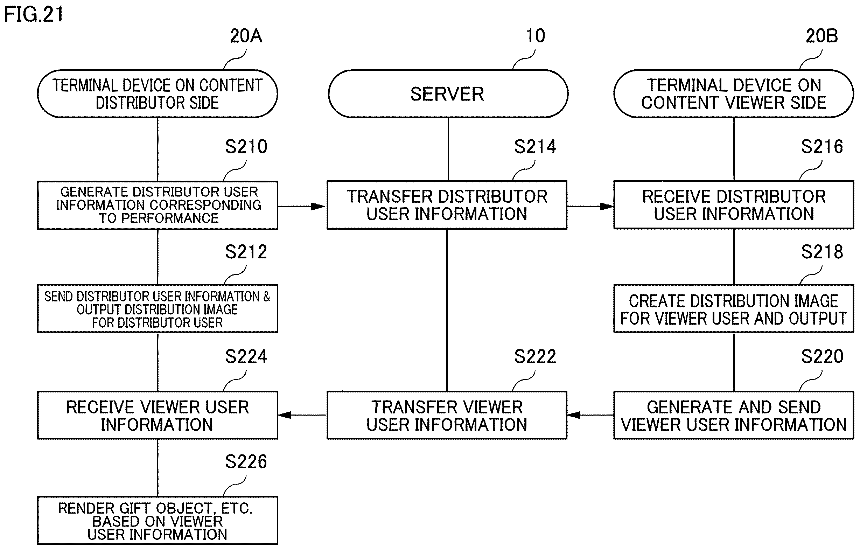

FIG. 21 is a flowchart illustrating an example of the operation of the terminal device 20A on the content distributor side, the terminal device 20B on the content viewer side, and the server 10, which is performed in the virtual reality generation system 1 illustrated in FIG. 1, during the distribution of specific content by the distributor user (i.e., while the viewer user is viewing the specific content).

In FIG. 21, the operation of a terminal device on the content distributor side (the terminal device 20A) is illustrated on the left, the operation of a server (the server 10) is illustrated in the center, and the operation of a terminal device on the content viewer side (the terminal device 20B) is illustrated on the right.

When the distributor user gives a performance or the like in front of the mirror 805, the terminal device 20A on the content distributor side generates distributor user information corresponding to the performance or the like (step S210). The terminal device 20A on the content distributor side sends the distributor user information to the server 10. The distributor user information may be mutually multiplexed by any multiplexing method and sent to the server 10, provided that the correspondence relationship between the information to be sent (having been sent) and a timestamp based on the reference time is clear to both the terminal device 20A on the content distributor side and the terminal device 20B on the content viewer side. If such a condition is satisfied, the terminal device 20B on the content viewer side can properly process the distributor user information according to the timestamp corresponding thereto upon receipt of the distributor user information. As to the multiplexing method, the distributor user information may be transmitted over separate channels, or part of the distributor user information may be transmitted over the same channel. A channel may include time slots, a frequency band, and/or a spreading code or the like. Note that the method of distributing a video (specific content) using the reference time may be implemented as disclosed in Japanese Patent No. 6803485, which is incorporated herein by reference.

Next, in parallel with the process in step S210, the terminal device 20A on the content distributor side outputs the distribution image H20 for the distributor user (see FIG. 12) while continuously sending the distributor user information for rendering the distribution image H21 for the viewer user to the terminal device 20B on the content viewer side (step S212) .

The terminal device 20A on the content distributor side can perform the processes in steps S210 and S212 concurrently with those in steps S214 to S222 described below.

Next, the server 10 sends (transfers) the distributor user information continuously received from the terminal device 20A on the content distributor side to the terminal device 20B on the content viewer side (step S214).

The terminal device 20B on the content viewer side receives the distributor user information from the server 10 and stores it in a memory 140 (step S216). In one embodiment, in consideration of the possibility that voice or audio information may have a larger volume than others and/or the possibility of communication line failure, the terminal device 20B on the content viewer side can temporarily store (buffer) the distributor user information received from the server 10 in the terminal memory 22 (see FIG. 1).

Concurrently with these processes of receiving and storing the distributor user information, the terminal device 20B on the content viewer side creates the distribution image H21 for the viewer user and plays specified content using the distributor user information received from the terminal device 20A on the content distributor side through the server 10 and stored (step S218) .

In parallel with the processes in steps S216 and S218 described above, the terminal device 20B on the content viewer side generates viewer user information and sends it to the terminal device 20A on the content distributor side through the server 10 (step S220). The viewer user information may be generated only on limited occasions such as, for example, when the viewer user performs an operation to present a gift.

The server 10 sends (transfers) the viewer user information received from the terminal device 20B on the content viewer side to the terminal device 20A on the content distributor side (step S222) .

The terminal device 20A on the content distributor side can receive the viewer user information through the server 10 (step S224) .

In step S226, the terminal device 20A on the content distributor side may perform basically the same process as in step S210. For example, the terminal device 20A on the content distributor side generates a gift rendering instruction based on the viewer user information received in step S224 and renders a corresponding gift object in the auxiliary information display layer J5 of the distribution image H20.

In this manner, the processes illustrated in FIG. 21 may be continuously performed until the distributor user ends the distribution of the specific content or until no user is viewing the specific content.

Note that, in the example of FIG. 21, the entity that performs each process may be changeable in various manners as described above. For example, in the process of step S212, the server 10 may perform the process of generating the distribution image H20 for the distributor user instead of the terminal device 20A. For another example, in the process of step S218, the terminal device 20A or the server 10 may perform the process of creating the distribution image H21 for the viewer user. In this case, the terminal device 20B on the content viewer side may receive data on the distribution image H21 for the viewer user instead of the distributor user information in step S216. In addition, in the process of step S226, the server 10 may perform the process of rendering a gift object in the auxiliary information display layer J5 of the distribution image H20 based on the viewer user information instead of the terminal device 20A.

### (Modification)

While the above embodiment provides an example in which wearable devices (head-mounted displays) are used as the terminal devices 20A and 20B, the virtual reality generation system 1 of the present disclosure may be configured as a metaverse (virtual space on the Internet) using mobile phones, smartphones, tablet terminals, personal computers (PCs), or the like as the terminal device 20A (an example of a first terminal device) and the terminal device 20B (an example of a second terminal device). In the following description of modifications for such a case, possible scenes, screen switching, and aspects of user interface (UI) when the system is configured as a metaverse will be described. Note that the description of the above embodiment applies to matters not mentioned in the following description to the extent technically reasonable. Incidentally, in the following modification, the user interface is implemented by the input unit 24, the first user interface unit 250A, and/or the second user interface unit 250B of the above embodiment.

Described first are possible scenes (cases) when the system is configured as a metaverse and the user interface in each scene.

In a scene where users view (co-view) content together, the user interface preferably includes a hierarchical menu for operations such as play, stop, and language selection. In other words, when users are co-viewing content on a single large screen, it is preferable that they each be allowed to perform operations such as volume adjustment, subtitle language selection, play/stop/fast forward, and the like individually, and in addition to direct operations, the authority settings be hierarchical. The user interface may provide menu items, for example, in a manner as follows: [play video > list view > co-view/view alone > fix here/operate together], [screen operation during playback > (if authorized) play/pause/fast forward/rewind/stop].

In a scene where an emotional motion or an emote (emotional expression) is added to an avatar, since each user directs their gaze to the screen when co-viewing, it is preferable that an emote be set more easily and quickly (e.g., semi-automatically) with an explicit indication of the targeted direction, rather than using a standard facial emote menu. The user interface may provide menu items, for example, in a manner as follows: [co-viewing screen > spectator mode > moving the stick up, down, left, right will result in {smile mark, heart mark, applause mark, semi-auto}], [semi-auto > follow other users' reactions/react automatically when there is cheering in the video].

In presentation mode, i.e., a scene where a user gives a presentation as a speaker, while the speaker among users may see a scenario, materials to be shared on the screen, a user interface to display them, and the like, neither a menu nor the user interface may be displayed for other users (however, a virtual cast is displayed). The user interface may provide menu items, for example, in a manner as follows: [go to next page/text to talk now/next image]. Since the user who is the speaker cannot look back, operations, preview, prepared images, and text are displayed on the screen.

In seated answer mode, i.e., a scene where users answer fast with options in a quiz show or an online education program, the user interface may display, for example, answer options and a raise hand button for each user. Once specified by an organizer, the user interface may be fixed until certain conditions are met to avoid too much freedom. A set of each question and answer options may include a timer, score, the number of coins to bet, and the like.

In placement mode, i.e., a scene where buildings are to be placed, menu items are presented hierarchically, for example, as follows: [placement → shop → outdoor → purchase (balance/payment/loan) → confirmation → location → direction ---> operation of other users possible/impossible ...]. In the case of placing buildings directly in a three-dimensional space, however, it is difficult to orient them in the same direction because they can only be "held and dropped". It is also difficult to set attributes such as "whether or not others can see, touch, and move around" after that. Therefore, the user interface may provide menu items, for example, in a manner as follows: [walk freely in 3D space → open menu → shop] . At this time, the three-dimensional space may be displayed lightly in the background of a two-dimensional shop image, and the menu and shop may not be visible to others. While being displayed, it appears to be still to others and is displayed with a floating magnifying-glass icon so that others can understand that the "shop" is being worked on. When the placement of an object involves a placement decision and a conflict with others, a "planned construction site" indication is displayed to others, and the processing is awaited if there is another user there. If the issue is not resolved after waiting for a certain period of time, the display may return to the confirmation screen again. In addition, when a cancelling operation is performed, sequences as to placement location and orientation may go back one step.

Described next are screen switching and the user interface when the system is configured as a metaverse.

Regarding the user's viewpoint, if the user is operating only from their own viewpoint, a problem arises when they want to view a scene from a bird's eye view or a third-person viewpoint. For this reason, the viewpoint may be switchable such that the user can view a scene from a bird's eye view when they have selected [overhead view] on the user interface. In this case, the user interface may provide menu items, for example, in a manner as follows: [menu → drone photo → enter drone operation mode when confirmed]. At this time, an aerial shot may be taken from a drone operated by a stick while motions are created with emotes or hands for a fixed avatar.

As to a layout view for a screenshot taken, a message such as "Do you want to share?" may be displayed on the confirmation screen in conjunction with continuous shooting mode. The user interface may provide menu items, for example, in a manner as follows: [open the film roll → line up some photos taken in the past and decide operation, left and right to select/up and down to share/filter/layout (vertical, horizontal, square)/delete, etc.].

In a game view during a game in a metaverse space (in-space-game), judgments and a score sheet are displayed according to the rules of the game. In addition, information for assisting the game (e.g., the aimed pin if the game is bowling, shapes that the opponent has formed with their hand and fingers so far if the game is rock paper scissors, etc.) may be displayed as well. On the other hand, there may be information that users do not want to let others see depending on the game or the nature of the game, such as weapon switching, opponent HP (hit point) display, and contact with allied groups, and such information may not be displayed.

If the game is a vehicle operation such as, for example, a car racing game, a ranking, a map, and the like may be displayed. In the case of a car racing game, the replacement control is performed to enable steering wheel operation, and when the user selects to ride in a car, the user interface is restricted to the drive UI. In this mode, a hand controller may work as a substitute for a steering wheel and accelerator/brake pedals, rather than hands, such that the user can move it left and right to operate the steering wheel and move it up and down to change gears and operate the accelerator/brake pedals.

In addition to what is mentioned above, for example, a view on smartphone compatibility may be displayed. Unlike a typical virtual smartphone display, this view is related to a smartphone purchase decision and facilitates decision-making or the like with the user interface (smartphone UI), which is displayed in such a manner that a three-dimensional background is hidden on the screen. The user interface may define, for example, how to use the trackpad and stick provided on various hand controllers (swipe, touch, hold, drag, etc.) according to the user environment. The hand controllers, trackpads, and sticks referred to herein, including the hand controller in a car racing game described above, may be real objects or virtual objects rendered in a virtual space.

While preferred embodiments of the invention have been described and illustrated, it is to be understood that the invention is not limited to the embodiments disclosed herein. Various changes, modifications, and alterations may be made within the scope of the invention as defined in the appended claims.

### [List of Reference Signs]

1 Virtual reality generation system
3 Network
10 Server
11 Server communication unit
12 Server memory
13 Server controller
20, 20A, 20B Terminal device
21 Terminal communication unit
22 Terminal memory
23 Display unit
24 Input unit
25 Terminal controller
30A, 30B Studio unit
140 Memory
200 Communication unit
200A, 200A' First rendering processor
201A, 201B First rendering unit
202A, 202B Second rendering unit
203A, 203B Third rendering unit
200B Second rendering processor
204B Fourth rendering unit
205B Fifth rendering unit
210 Memory
210A First information generator
210B Second information generator
211A First detector
211B Second detector
212A First voice information generator
212B Second voice information generator
213A First text information generator
213B Second text information generator
220A First communication unit
220B Second communication unit
221A, 221B Distribution processor
222A Viewer user information acquisition unit
222B Distributor user information acquisition unit
230A First display unit
230B Second display unit
240A First memory
240B Second memory
250A First user interface unit
250B Second user interface unit
251A First input detector
251B Second input detector
252A First input processor
252B Second input processor

## Claims

1. An information processing system, comprising:
a first detector that detects a state of a first user that distributes content including an image of a first virtual space;
a first rendering processor that renders the image of the first virtual space, which the first user or a second user that views the content can view through a first terminal device related to the first user or a second terminal device related to the second user; and
a first memory that stores a first display medium associated with the first user, wherein
the image of the first virtual space has a plurality of layers,
the first rendering processor includes:
a first rendering unit that renders a first image area of a layer related to the first display medium among the layers, and
a second rendering unit that renders a second image area of a layer related to a first user interface among the layers, and
the first rendering unit changes a state of the first display medium in the first image area based on the state of the first user detected by the first detector.

2. The information processing system according to claim 1, wherein
the first display medium is in the form of a character having a front side,
the first detector detects, as the state of the first user, user information on at least one of orientation, position, or movement of the first user in a real space, and
the first rendering unit renders the first image area so as to realize at least one of orientation, position, or movement of the character according to the user information.

3. The information processing system according to claim 1 or 2, wherein the first rendering unit renders the first display medium translucent.

4. The information processing system according to any one of claims 1 to 3, wherein
the first display medium functions as an avatar of the first user, and
the first rendering unit renders the first display medium located in the first virtual space based on an image reflected in a mirror placed in the first virtual space to generate the first image area.

5. The information processing system according to claim 4, wherein the first rendering processor further includes a third rendering unit that renders a third image area of at least either one of a layer related to background or a layer located closer to a viewpoint of the first user than the background and farther from the viewpoint of the first user than the second image area, among the layers.

6. The information processing system according to claim 5, wherein the third image area rendered by the third rendering unit includes information related to the second user.

7. The information processing system according to claim 6, further comprising a second memory that stores a second display medium associated with the second user,
wherein the third rendering unit renders the second display medium as the information related to the second user.

8. The information processing system according to claim 5, wherein the third image area rendered by the third rendering unit includes at least one of input information from the second user, guidance/notification information for the first user and/or the second user, or information on items including a gift object to be presented to the first user.

9. The information processing system according to any one of claims 1 to 8, further comprising:
a first input detector that detects an input provided by the first user through the first user interface based on the state of the first user detected by the first detector and a state of the second image area; and
a first input processor that performs a variety of first processes, each according to the input detected by the first input detector.

10. The information processing system according to claim 9, wherein the first processes include at least one of the following: a process to start distributing the content, a process to end distribution of the content, an audio input process, a process to receive a gift, a process of drawing lots for an item that can be rendered in association with the first display medium, a process of selecting/replacing an item that can be rendered in association with the first display medium, a text input process, a process of accepting another user, a process of changing a value of a parameter of the content, a process of transitioning to a state where any of these processes can be performed.

11. The information processing system according to any one of claims 1 to 10, wherein the first rendering processor is implemented by the first terminal device, an external processing device communicably connected to the first terminal device, the second terminal device communicably connected to the first terminal device, a terminal device related to the second user that is communicably connected to the first terminal device and is other than the second terminal device, or any combination of these.

12. The information processing system according to any one of claims 1 to 11, wherein the first virtual space is cylindrical or spherical.

13. The information processing system according to any one of claims 1 to 12, further comprising a second rendering processor that renders an image of a second virtual space, which the first user or the second user can view through the first terminal device or the second terminal device, wherein
the image of the second virtual space has a plurality of layers,
the second rendering processor includes:
a fourth rendering unit that renders a fourth image area of a layer related to a second user interface among the layers, and
a fifth rendering unit that renders a fifth image area of a layer located behind the fourth image area as viewed from a viewpoint of the first user or the second user, among the layers, and
the fourth rendering unit renders a plurality of planar operation areas related to the second user interface along a spherical surface or a curved surface.

14. The information processing system according to claim 13, wherein the fourth rendering unit renders, based on a predetermined reference axis extending in a vertical direction in the second virtual space, at least some of the planar operation areas in a plurality of rows along a first curved surface centered on the predetermined reference axis at a position according to a position of the second user in the second virtual space.

15. The information processing system according to claim 14, wherein the fourth rendering unit renders other some of the planar operation areas in a plurality of rows along a second curved surface, which is offset to be located behind the first curved surface centered on the predetermined reference axis as viewed from the viewpoint of the first user or the second user.

16. The information processing system according to claim 15, further comprising:
a second detector that detects a state of the second user that has entered the second virtual space;
a second input detector that detects an input provided by the second user through the second user interface based on the state of the second user detected by the second detector and a state of the fourth image area; and
a second input processor that performs a variety of second processes, each according to the input detected by the second input detector.

17. The information processing system according to claim 16, wherein the second processes include at least one of the following: a process of changing arrangement of the second user interface, a process of moving the first user to an arbitrary location or a specific location in the first virtual space, a process to start distributing the content, a process to start viewing the content, a process to end viewing of the content, an audio input process, a process of giving a gift, a process of drawing lots for an avatar item, a process of selecting/replacing an avatar item, a text input process, a process of transitioning to a state where any of these processes can be performed.

18. The information processing system according to claim 17, wherein the specific location includes a location where the first user can select an item that can be rendered in association with the first display medium.

19. The information processing system according to claim 17 or 18, wherein
the operation areas rendered along the second curved surface are overlaid behind the operation areas rendered along the first curved surface as viewed from the viewpoint of the second user, and
the second input processor causes the fourth rendering unit to change the arrangement of the second user interface based on a predetermined input detected by the second input detector such that the operation areas rendered along the first curved surface are arranged along the second curved surface, and the operation areas rendered along the second curved surface are arranged along the first curved surface.

20. The information processing system according to any one of claims 16 to 19, wherein the planar operation areas are associated with the second processes.

21. The information processing system according to any one of claims 13 to 20, wherein the fifth image area includes an image area of a layer related to background among the layers, and an image area of a layer located closer to the viewpoint of the first user or the second user than the background, which contains information on at least part of the planar operation areas, among the layers.

22. The information processing system according to any one of claims 13 to 21, wherein the second rendering processor is implemented by the first terminal device, an external processing device communicably connected to the first terminal device, the second terminal device communicably connected to the first terminal device, a terminal device related to the second user that is communicably connected to the first terminal device and is other than the second terminal device, or any combination of these.

23. The information processing system according to any one of claims 13 to 22, wherein the second virtual space is cylindrical or spherical.

24. An information processing method implemented by a computer, comprising:
a first detection step for detecting a state of a first user that distributes content including an image of a first virtual space;
a first rendering processing step for rendering the image of the first virtual space, which the first user or a second user that views the content can view through a first terminal device related to the first user or a second terminal device related to the second user; and
a first storing step for storing a first display medium associated with the first user, wherein
the image of the first virtual space has a plurality of layers,
the first rendering processing step includes:
a first rendering step for rendering a first image area of a layer related to the first display medium among the layers, and
a second rendering step for rendering a second image area of a layer related to a first user interface among the layers, and
the first rendering step includes changing a state of the first display medium in the first image area based on the state of the first user detected in the first detection step.

25. The information processing method according to claim 24, further comprising a second rendering processing step for rendering an image of a second virtual space, which the first user or the second user can view through the first terminal device or the second terminal device, wherein
the image of the second virtual space has a plurality of layers,
the second rendering processing step includes:
a fourth rendering step for rendering a fourth image area of a layer related to a second user interface among the layers, and
a fifth rendering step for rendering a fifth image area of a layer located behind the fourth image area as viewed from a viewpoint of the first user or the second user, among the layers, and
the fourth rendering step includes rendering a plurality of planar operation areas related to the second user interface along a spherical surface or a curved surface.

26. An information processing program that causes a computer to implement:
a first detection function of detecting a state of a first user that distributes content including an image of a first virtual space;
a first rendering processing function of rendering the image of the first virtual space, which the first user or a second user that views the content can view through a first terminal device related to the first user or a second terminal device related to the second user; and
a first storing function of storing a first display medium associated with the first user, wherein
the image of the first virtual space has a plurality of layers,
the first rendering processing function includes:
a first rendering function of rendering a first image area of a layer related to the first display medium among the layers, and
a second rendering function of rendering a second image area of a layer related to a first user interface among the layers, and
the first rendering function includes changing a state of the first display medium in the first image area based on the state of the first user detected by the first detection function.

27. The information processing program according to claim 26, further causing the computer to implement a second rendering processing function of rendering an image of a second virtual space, which the first user or the second user can view through the first terminal device or the second terminal device, wherein
the image of the second virtual space has a plurality of layers,
the second rendering processing function includes:
a fourth rendering function of rendering a fourth image area of a layer related to a second user interface among the layers, and
a fifth rendering function of rendering a fifth image area of a layer located behind the fourth image area as viewed from a viewpoint of the first user or the second user, among the layers, and
the fourth rendering function includes rendering a plurality of planar operation areas related to the second user interface along a spherical surface or a curved surface.
